# EUROPÄISCHE PATENTSCHRIFT

(11) **EP 3 737 873 B1**
(45) Veröffentlichungstag und Bekanntmachung des Hinweises auf die Patenterteilung: **12.07.2023**
(21) Anmeldenummer: 19702336.9
(22) Anmeldetag: 10.01.2019
(51) Int. Cl.: F16F 9/53, B60T 1/08

(54) **MAGNETORHEOLOGISCHE BREMSEINRICHTUNG**
MAGNETORHEOLOGICAL BRAKE DEVICE
DISPOSITIF DE FREINAGE MAGNÉTORHÉOLOGIQUE

(30) Priorität: 10.01.2018 DE 102018100390
(43) Veröffentlichungstag der Anmeldung: 18.11.2020
(73) Patentinhaber: INVENTUS Engineering GmbH, 6771 St. Anton i.M. (AT)
(72) Erfinder: BATTLOGG, Stefan, 6771 St. Anton i.M. (AT)
(74) Vertreter: BSB Patentanwälte Schütte & Engelen Partnerschaft mbB
(86) Internationale Anmeldenummer: PCT/EP2019/050592
(87) Internationale Veröffentlichungsnummer: WO 2019/138015

(56) Entgegenhaltungen:
- WO-A1-2017/001696
- WO-A2-2017/168004
- DE-A1- 10 055 388
- DE-A1-102012 013 480
- DE-A1-102012 017 423
- DE-B4-102012 013 480

## Beschreibung

Die Erfindung betrifft eine magnetorheologische Bremseinrichtung mit einem feststehenden Halter und mit wenigstens zwei Bremskomponenten. Die erfindungsgemäße magnetorheologische Bremseinrichtung kann auf vielfältigen technischen Gebieten zum Abbremsen von Relativbewegungen zueinander eingesetzt werden. Die erfindungsgemäße magnetorheologische Bremseinrichtung kann auch als haptische Bedieneinrichtung eingesetzt werden und zum Beispiel bei der Bedienung von technischen Einrichtungen in Fahrzeugen, Luftfahr- und Flugzeugen, Schiffen, Booten, Landtechnik (Traktoren, Mähdrescher, Erntemaschinen, sonstigen Feldmaschinen für die Landwirtschaft), Baumaschinen und Maschinen für das Material Handling (Gabelstapler...) oder bei medizinischen oder industriellen Anlagen eingesetzt werden. Die Erfindung kann auch bei der Bedienung oder als Eingabegerät von/für Waschmaschinen, Küchen-/Haushaltsgeräten und -einrichtungen, Radios, Fotoapparaten und Filmkameras, Hi-Fi- und Fernsehanlagen, Smart Devices, Smart-Home-Geräten, Laptops, PCs, Smartwatches, in einem Kronenrad von Armbanduhren oder als Drehrad in einer Computermaus oder anderen Geräten verwendet werden. Magnetorheologische Fluide weisen beispielsweise in einem Öl verteilt feinste ferromagnetische Partikel wie beispielsweise Carbonyleisenpulver auf. In magnetorheologischen Flüssigkeiten werden kugelförmige Partikel mit einem herstellungsbedingten Durchmesser von 1 bis 10 um verwendet, wobei die Partikelgröße und Form nicht einheitlich ist. Wird ein solches magnetorheologisches Fluid mit einem Magnetfeld beaufschlagt, so verketten sich die Carbonyleisenpartikel des magnetorheologischen Fluids entlang der Magnetfeldlinien, sodass die rheologischen Eigenschaften des magnetorheologischen Fluides (MRF) abhängig von Form und Stärke des Magnetfeldes erheblich beeinflusst werden. Die WO 2017/001 696 A1 der Anmelderin offenbart einen Bedienknopf mit den Merkmalen des Oberbegriffs von Anspruch 1. Der Bedienknopf funktioniert an sich gut, aber das erzeugbare Drehmoment ist begrenzt. Eine Vergrößerung der Konstruktion kann das erzeugbare Drehmoment vergrößern, ist aber nicht immer gewünscht. Außerdem nimmt der minimale Drehwiderstand im Leerlauf dann zu.

Die WO 2017/168 004 A2 der Anmelderin zeigt ein Trainingsgerät mit einer magnetorheologischen Bremse. Dabei ein umlaufender magnetorheologisch gebremster Scherspalt mit einem Magnetfeld beaufschlagt werden, um eine Bremswirkung in dem mit dem magnetorheologischen Medium gefüllten zylindrischen Bremsspalt zu erzeugen. Das erzeugbare Bremsmoment im Scherspalt ist begrenzt. Deshalb muss die Bremse größer konstruiert werden. Alternativ kann auch der mit einem magnetorheologischen Fluid gefüllte Pumpenraum einer Gerotorpumpe mit einem Magnetfeld beaufschlagt werden, um eine gezielte Bremswirkung zu erzeugen. Damit lassen sich hohe Bremsmomente für den Einsatz an Trainingsgeräten für z. B. Fitnessstudios einstellen. Nachteilig ist dabei das relativ hohe Grundmoment, wenn gar nicht gebremst werden soll.

Die DE 10 2012 017 423 A1 der Anmelderin betrifft eine magnetorheologische Übertragungseinrichtung, bei der zwei Bremskomponenten linear zueinander bewegt werden. In einem zylindrischen Bremsspalt wird ein gezieltes Bremsmoment eingestellt. Aufgrund des zylindrischen Scherspaltes ist die in einem gegebenen Bauraum erzielbare Bremskraft begrenzt.

Mit der DE 100 55 388 A1 ist ein magnetorheologisches Kolben-Zylinderaggregat mit einem Zylinder bekannt geworden, in dem ein Verdränger axial beweglich angeordnet ist.

Die DE 10 2012 013 480 A1 der Anmelderin betrifft eine Baugruppe und ein Verfahren zu dessen Herstellung, bei dem die Magnetfelderzeugungseinrichtung unter Ausbildung eines Strömungskanals mit einem sich verfestigenden Medium verfüllt ist.

Mit der WO 2012/034697 A1 ist eine magnetorheologische Übertragungsvorrichtung bekannt geworden, die zwei koppelbare Komponenten aufweist, deren Kopplungsintensität beeinflussbar ist. Zur Beeinflussung der Kopplungsintensität ist ein Kanal mit einem magnetorheologischen Medium vorgesehen. Über ein Magnetfeld wird das magnetorheologische Medium in dem Kanal beeinflusst. In dem Kanal sind Drehkörper vorgesehen, an denen spitzwinklige und das magnetorheologische Medium enthaltende Bereiche vorgesehen sind. Der Kanal oder wenigstens ein Teil davon ist mit dem Magnetfeld einer Magnetfelderzeugungseinrichtung beaufschlagbar, um die Partikel wahlweise zu verketten und mit dem Drehkörper zu verkeilen oder freizugeben. Diese magnetorheologische Übertragungsvorrichtung kann auch an einem Drehknopf zur Bedienung von technischen Geräten eingesetzt werden. Eine solche magnetorheologische Übertragungsvorrichtung funktioniert und erlaubt die Übertragung von recht hohen Kräften oder Momenten bei gleichzeitig relativ kleiner Bauform.

In der WO 2012/034697 A1 ist auch ein Drehknopf oder Bedienknopf offenbart, bei dem der eigentliche Knopf um eine Welle drehbar angebracht ist. Über das Magnetfeld einer elektrischen Spule kann das Bremsmoment gesteuert werden. Wird ein höheres erzeugbares Bremsmoment gewünscht, so können statt kugelförmiger Drehkörper auch zylindrische Walzen eingesetzt werden, sodass das Magnetfeld auf einer längeren Strecke bzw. größeren Fläche wirkt. Es hat sich insbesondere bei Dreh- oder Bedienknöpfen mit relativ kleinem Durchmesser gezeigt, dass eine Verlängerung der Wälzkörper nicht unbedingt zu einer Erhöhung des maximal erzeugbaren Bremsmomentes führt. Es hat sich herausgestellt, dass dies daran liegt, dass das Magnetfeld durch die zentrale Welle geschlossen wird bzw. hindurch gehen muss. Der kleine Durchmesser der Welle begrenzt das erzeugbare Bremsmoment, da das für die Bremsung erforderliche Magnetfeld im (Wellen)material schnell gesättigt ist. Das vom Magnetfeld durchflossene Material lässt keinen höheren Magnetfluss mehr zu, weshalb auch kein stärkeres Magnetfeld zu den Walzen gelangen kann. Der kleinste vom Magnetfeld durchflossene Querschnitt im Gesamtmagnetkreis definiert den maximal möglichen Magnetfluss und damit das maximale Bremsmoment in der Bremsvorrichtung. Der Einsatz von längeren Walzen als Drehkörpern kann sich dann sogar nachteilig auf das erzeugbare Bremsmoment auswirken, da sich das Magnetfeld über die längere Walzenfläche verteilt. Es liegt eine geringere Feldstärke an. Weil die erzielbare Bremswirkung nicht linear von dem Magnetfeld abhängt, sondern bei stärkeren Magnetfeldern überproportional steigt, sinkt die erzielbare Bremswirkung dementsprechend bei schwächeren Magnetfeldern überproportional.

Es ist deshalb die Aufgabe der vorliegenden Erfindung, eine magnetorheologische Bremseinrichtung zur Verfügung zu stellen, welche insbesondere auch bei kleinen oder sogar bis sehr kleinen Durchmessern ein hohes Bremsmoment (Drehmoment) bzw. ein höheres Bremsmoment (Drehmoment) erlaubt als es im Stand der Technik der Fall ist.

Diese Aufgabe wird gelöst durch eine magnetorheologische Bremseinrichtung mit den Merkmalen des Anspruchs 1. Bevorzugte Weiterbildungen der Erfindung sind Gegenstand der Unteransprüche. Weitere Vorteile und Merkmale der magnetorheologischen Bremseinrichtung ergeben sich aus der allgemeinen Beschreibung und der Beschreibung der Ausführungsbeispiele.

Eine erfindungsgemäße magnetorheologische Bremseinrichtung weist einen feststehenden Halter und wenigstens zwei Bremskomponenten auf. Eine erste Bremskomponente ist mit dem Halter drehfest verbunden und erstreckt sich in einer axialen Richtung. Die zweite Bremskomponente umfasst ein sich um die erste Bremskomponente herum drehbares und hohl ausgebildetes Hülsenteil. Zwischen der ersten und der zweiten Bremskomponente ist ein Spalt ausgebildet. In dem Spalt ist wenigstens eine, zwei oder mehr insbesondere drehbare Übertragungskomponenten angeordnet. Der Spalt ist wenigstens zum Teil mit einem magnetorheologischen Medium gefüllt. Dabei benetzt das magnetorheologische Medium die Übertragungskomponenten. Die erste Bremskomponente umfasst einen sich in der axialen Richtung erstreckenden Kern aus einem magnetisch leitfähigen Material und (wenigstens) einer elektrischen Spule, die in axialer Richtung um den Kern gewickelt ist, sodass sich ein Magnetfeld der elektrischen Spule quer durch die erste Bremskomponente erstreckt.

Die erste Bremskomponente definiert eine axiale Richtung. Die erste Bremskomponente kann aber auch wenigstens örtlich zur axialen Richtung gewinkelt ausgebildet sein. Unter der Formulierung, dass sich der Kern der ersten Bremskomponente in der axialen Richtung erstreckt, wird im Sinne der vorliegenden Erfindung verstanden, dass sich der Kern wenigstens auch im Wesentlichen in die axiale Richtung erstreckt. Der Kern kann einen Verlauf aufweisen, der einen leichten Winkel zur axialen Richtung aufweist. Beispielsweise kann der Kern auch unter einem Winkel von 2,5° oder 5° oder 10° oder 15° zur axialen Richtung ausgerichtet sein. Die Wicklung der elektrischen Spule muss ebenso nicht exakt in axialer Richtung um den Kern ausgerichtet sein. Auch die elektrische Spule kann unter einem Winkel von 5° oder 10° oder 15° oder dergleichen zur axialen Richtung um den Kern gewickelt sein. Es ist in allen Fällen aber bevorzugt, dass ein Winkel zwischen der Ausrichtung des Kerns und der axialen Richtung und ein Winkel der Wicklung der elektrischen Spule zur axialen Richtung kleiner 20° und insbesondere kleiner 10° beträgt.

Die erfindungsgemäße magnetorheologische Bremseinrichtung hat viele Vorteile. Ein erheblicher Vorteil der erfindungsgemäßen magnetorheologischen Bremseinrichtung besteht darin, dass die elektrische Spule an der ersten Bremskomponente vorgesehen ist. Ein besonderer Vorteil ergibt sich dadurch, dass die elektrische Spule in axialer Richtung wenigstens einen wesentlichen Teil des Kerns oder den Kern insgesamt um den Kern gewickelt ist. Dadurch ergibt sich, dass das Magnetfeld der elektrischen Spule quer zur axialen Richtung der ersten Bremskomponente verläuft (also radial bezogen auf die Längsachse). Es ist ein erheblicher Unterschied zu dem mit der WO 2012/034697 A1 bekannt gewordenen Stand der Technik, wo die elektrische Spule an der äußeren Komponente vorgesehen ist und wobei sich die Wicklungen der elektrischen Spule konzentrisch um die axiale Richtung herum erstrecken. Dadurch wird im Stand der Technik ein Magnetfeld erzeugt, welches sich in axialer Richtung durch die innere der beiden Komponenten erstreckt. Die innere Komponente, meist eine konstruktiv bedingte dünne Welle, beschränkt somit beim Stand der Technik den Magnetflussquerschnitt und damit den maximal zu erzielenden Gesamtmagnetfluss. Im Unterschied dazu verläuft das Magnetfeld bzw. verlaufen die Magnetfeldlinien hier quer dazu und somit quer durch die erste bzw. innere Bremskomponente. Eine Verlängerung der ersten Bremskomponente erhöht hier bei gleichem Durchmesser den möglichen Magnetfluss und damit das Bremsmoment. Der meist konstruktiv nicht größer mögliche Kerndurchmesser beschränkt somit nicht mehr den Magnetfluss. Die Wicklung(en) der elektrischen Spule liegen bei der vorliegenden Erfindung vorzugsweise (wenigstens im Wesentlichen) in einer Ebene oder dicht benachbart zu der Ebene, welche die zentrale Achse der axialen Richtung einschließt. Bei der WO 2012/034697 A1 liegt die zentrale Achse hingen senkrecht zu der Ebene der Wicklungen der elektrischen Spule.

Bei der magnetorheologischen Bremseinrichtung sind die Übertragungskomponenten wenigstens zum Teil von einem magnetorheologischen Medium umgeben. Insgesamt wird vorzugsweise ein magnetorheologisches Fluid als magnetorheologisches Medium eingesetzt.

Vorzugsweise sind über dem Umfang des Spaltes mehrere insbesondere drehbare Übertragungskomponenten verteilt angeordnet. Die Übertragungskomponenten sind in dem Spalt drehbar und drehen sich vorzugsweise wenigstens zum Teil während einer Drehung der ersten und zweiten Bremskomponente relativ zueinander. Ein zentraler Bestandteil der drehbaren Übertragungskomponente oder die drehbare Übertragungskomponente insgesamt ist insbesondere formstabil und ändert während einer Drehung die äußere Form (wenigstens im Wesentlichen) nicht. Vorzugsweise dreht sich die drehbare Übertragungskomponente wenigstens etwas während einer Drehung der zweiten Bremskomponente relativ zu der ersten Bremskomponente.

In einer bevorzugten Weiterbildung ist wenigstens eine Übertragungskomponente als Wälzkörper ausgebildet. Unter dem Begriff "Wälzkörper" ist im Sinne der vorliegenden Erfindung ein Drehkörper zu verstehen, der geeignet ist, in dem Spalt auf der ersten bzw. zweiten Bremskomponente abzurollen.

Vorzugsweise weist wenigstens ein Wälzkörper einen zylindrischen oder kugelförmigen oder runden oder abgerundeten (im Wesentlichen formstabilen)Querschnitt auf. Insbesondere kann ein Wälzkörper einen (lang gestreckten) zylindrischen Abschnitt aufweisen. An den Enden kann der Wälzkörper abgerundet sein oder spitz zulaufend oder eckig gestaltet sein. Auch andere Abschnitte und insbesondere Endabschnitte sind möglich. Besonders bevorzugt werden zylindrischer Walzen als Wälzkörper eingesetzt. Ein zylindrischer Wälzkörper hat den erheblichen Vorteil, dass der Wälzkörper über der Länge des zylindrischen Abschnitts wirksam sein kann. Dadurch wird die Effektivität erhöht.

Ein erheblicher Vorteil der vorliegenden Erfindung besteht darin, dass durch eine Verlängerung eines beispielsweise zylindrischen Wälzkörpers ein stärkeres Bremsmoment erzeugbar ist. Gleichzeitig mit der Verlängerung des Wälzkörpers kann (in sinnvoller Weise) auch die elektrische Spule verlängert werden, die sich in Längsrichtung der ersten Bremskomponente erstreckt. Mit einer elektrischen Spule, die in axialer Richtung länger ausgebildet ist, wird eine größere Durchtrittsfläche (vom Magnetfeld durchflossene Querschnittsfläche) für das Magnetfeld zur Verfügung gestellt. Deshalb bewirkt bei der vorliegenden Erfindung eine Verlängerung der ersten Bremskomponente in axialer Richtung auch eine Vergrößerung des Querschnitts des Kerns.

Dadurch kann ein stärkeres Bremsmoment durch eine Verlängerung der ersten Bremskomponente in axialer Richtung erreicht werden.

In bevorzugten Ausgestaltungen besteht wenigstens ein Teil der Übertragungskomponenten aus einem magnetisch leitfähigen Material. Insbesondere besteht wenigstens ein Teil der Übertragungskomponenten aus einem magnetisch nicht leitfähigen Material. Werden Übertragungskomponenten eingesetzt, die aus einem magnetisch leitfähigen Material bestehen und werden gleichzeitig auch Übertragungskomponenten eingesetzt, die aus einem magnetisch nicht leitfähigen Material bestehen, so konzentriert sich das Magnetfeld im Bereich der magnetisch leitfähigen Übertragungskomponenten. Das führt zu der Konzentration des Magnetfeldes und zu einer örtlichen Verstärkung (Magnetfeldlinienkonzentration). Da der Zusammenhang zwischen erzeugbarem Bremsmoment und Stärke des Magnetfeldes nicht linear ist und da das erzeugbare Bremsmoment mit stärker werdendem Magnetfeld noch überproportional stärker wird, kann dadurch eine erhebliche Verstärkung des erzeugbaren Bremsmomentes (bei gleichem Bauraum/Abmessungen) erzielt werden.

In allen Ausgestaltungen ist es für eine Erhöhung des erzeugbaren Bremsmomentes nicht nötig, den Durchmesser der ersten Bremskomponente zu erhöhen. Dies ist deshalb sehr wichtig, weil viele Einsatzmöglichkeiten einen größeren Außendurchmesser einer Bremseinrichtung nicht zulassen bzw. ein größerer Außendurchmesser ein gravierender Wettbewerbsnachteil wäre (z.B. ein übergroßes seitliches Einstellrad bei einer Armbanduhr). Für eine Verstärkung/Erhöhung des Bremsmomentes kann die erste Bremskomponente axial länger ausgebildet werden, was bauraumtechnisch kein bzw. ein kleinerer Nachteil ist.

In allen Ausgestaltungen ist es bevorzugt, dass das Hülsenteil an einem Drehknopf ausgebildet ist. Vorzugsweise kann das Hülsenteil einstückig mit dem Drehknopf gebildet werden. Bei solchen Ausgestaltungen ist es bevorzugt, dass der Drehknopf bzw. das Hülsenteil "topf"-förmig ausgebildet ist. Der "Deckel" des Hülsenteils kann einstückig damit verbunden sein oder separat daran befestigt werden.

Vorzugsweise besteht das Hülsenteil aus einem magnetisch leitenden Material und stellt einen Außenring für das Magnetfeld zur Verfügung. Das Magnetfeld zu Erzeugung eines Bremsmomentes tritt quer zu axialen Richtung durch die erste Bremskomponente hindurch und durchtritt den Spalt an den Wälzkörpern, die magnetisch leitend ausgebildet sind. Von den Wälzkörpern aus tritt das Magnetfeld in den Außenring bzw. in das Hülsenteil ein. Dort verlaufen die Magnetfeldlinien zurück zur anderen Seite der ersten Bremskomponente und durchtreten (auf der gegenüberliegenden Seite) den Spalt wieder an den Wälzkörpern, bevor die Magnetfeldlinien wieder in die erste Bremskomponente eintreten. Somit liegt ein geschlossener Magnetkreis bzw. liegen geschlossene Magnetfeldlinien vor.

An den Wälzkörpern bildet sich unter dem Einfluss eines Magnetfeldes bei einer Relativdrehung der ersten und der zweiten Bremskomponente relativ zueinander ein Keileffekt aus, so wie er in der WO 2012/034697 A1 beschrieben ist. Die Offenbarung dieser Druckschrift wird vollständig mit in diese Anmeldung aufgenommen. Das Bremsmoment bei der vorliegenden Erfindung wird ebenfalls durch den Keileffekt an den Übertragungskomponente bzw. Wälzkörpern bzw. Drehkörpern erzeugt.

Vorzugsweise ist wenigstens eine radiale Wandstärke des Hülsenteils wenigstens halb so groß wie eine Spaltbreite des Spaltes und/oder ein Durchmesser einer Übertragungskomponente. Vorzugsweise ist eine radiale Wandstärke des Hülsenteils größer als 3/4 der Spaltbreite des Spaltes und/oder eines Durchmessers einer Übertragungskomponente. Die radiale Wandstärke des Hülsenteils kann insbesondere auch größer sein als ein Durchmesser einer Übertragungskomponente. Durch eine genügende Wandstärke des aus einem magnetisch leitenden Materials bestehenden Hülsenteils kann gewährleistet werden, dass die gewünschte Feldstärke des Magnetfeldes im Bereich der Wälzkörper erzeugt werden kann, um ein hohes Bremsmoment erzeugen zu können.

In allen Ausgestaltungen ist es bevorzugt, dass eine Länge der ersten Bremskomponente in der axialen Richtung größer ist als eine Länge einer Übertragungskomponente in der axialen Richtung. Wenn die Übertragungskomponente in der axialen Richtung kürzer ausgebildet ist als die erste Bremskomponente führt dies zu einer dreidimensionalen Konzentration des Magnetfeldes im Randbereich der Übertragungskomponente bzw. des Wälzkörpers. Das Magnetfeld kann den Spalt praktisch nur in den Abschnitten durchtreten, in denen sich eine Übertragungskomponente bzw. ein Wälzkörper befindet.

Vorzugsweise ist eine Länge des Spaltes in der axialen Richtung wenigstens doppelt so groß wie eine Länge einer Übertragungskomponente in axialer Richtung. Möglich und bevorzugt ist es auch, dass zwei oder mehr Übertragungskomponenten und insbesondere Wälzkörper in axialer Richtung hintereinander angeordnet sind. Möglich ist es dabei zum Beispiel, dass sich magnetisch leitende Übertragungskomponenten und magnetisch nicht leitende Übertragungskomponenten in axialer Richtung abwechselnd, sodass beispielsweise jede zweite oder dritte Übertragungskomponente in axialer Richtung magnetisch nicht leitend ausgebildet ist. Dadurch wird eine Konzentration des Magnetfeldes erzeugt, die vorteilhaft für das maximal erzeugbare Bremsmoment ist.

Vorzugsweise ist die erste Bremskomponente im Wesentlichen zylindrisch ausgebildet und umfasst einen zylindrischen Grundkörper als Kern und die elektrische Spule bzw. die elektrischen Spulen. Möglich ist es auch, dass beispielsweise eine Kugel zum Lagern des Drehknopfes umfasst ist, die am distalen Ende zentral angeordnet sein kann, um eine einfache Lagerung zwischen der ersten Bremskomponente und der zweiten Bremskomponente zur Verfügung zu stellen.

Vorzugsweise ist die elektrische Spule in Axialnuten und Quernuten des zylindrischen Grundkörpers (der ersten Bremskomponente) gewickelt. Vorzugsweise sind die Axialnuten und die Quernuten wenigstens teilweise mit Vergussmasse gefüllt. Dadurch wird verhindert, dass in den Bereich der Spulendrähte magnetorheologisches Medium bzw. magnetorheologisches Fluid eintritt. Das könnte zu einer Entmischung des Fluids führen.

In bevorzugten Ausgestaltungen ist es möglich, dass der zylindrische Grundkörper (der ersten Bremskomponente) von einem Hülsenkörper umgeben ist, der fest mit dem zylindrischen Grundkörper verbunden ist. Dabei ist eine radiale Dicke des Hülsenkörpers vorzugsweise erheblich kleiner als die Hälfte der radialen Spaltbreite des Spalts. Besonders bevorzugt ist die radiale Dicke des Hülsenkörpers kleiner als 1/4 der radialen Spaltbreite des Spalts. Besonders bevorzugt beträgt eine radiale Dicke des Hülsenkörpers weniger als 1/6, 1/8 oder 1/10 eines Durchmessers eines Wälzkörpers. In besonders bevorzugten Ausgestaltungen besteht der Hülsenkörper aus einem magnetisch leitenden Material. Der Hülsenkörper stellt eine Schutzhülse zu Verfügung. Dadurch wird ein Abrieb der Vergussmasse beim Abwälzen der Drehkörper zuverlässig verhindert. Grundsätzlich durchtritt den Spalt im Bereich der Vergussmasse zwar kein oder nur ein äußerst geringes Magnetfeld, sodass dort keine nennenswerten Kräfte auf die Wälzkörper und somit die Vergussmasse einwirken. Dennoch kann bei dauerhaftem Betrieb ein Verschleiß auftreten, der durch einen dünnen Hülsenkörper zuverlässig vermieden wird. Ein dünner Hülsenkörper reduziert den magnetischen Verlust, da nur ein kleiner Teil des Magnetfeldes über den Hülsenkörper kurzgeschlossen wird.

Vorzugsweise weist der Halter eine Kabeldurchführung auf. Durch den Halter bzw. durch die Kabeldurchführung des Halters können Anschlusskabel für die Spule und/oder Sensorkabel und dergleichen mehr geführt werden. Dadurch werden eine leichte Montage und eine kostengünstige Herstellung ermöglicht.

Vorzugsweise weist der Halter eine Aufnahme zur drehfesten Verbindung mit der ersten Bremskomponente auf. Dabei kann der Halter die erste Bremskomponente kraftschlüssig und/oder formschlüssig aufnehmen. Im Betrieb wird das Bremsmoment zwischen der ersten Bremskomponente und der zweiten Bremskomponente über den Halter abgeführt.

Vorzugsweise weist der Halter eine zylindrische Lauffläche für ein Lager auf und stützt das Hülsenteil drehbar auf dem Halter ab.

An der zylindrischen Lauffläche ist vorzugsweise eine Dichtung zum Abdichten des Spaltes angeordnet, wobei die Dichtung insbesondere näher an dem Spalt angeordnet ist als das Lager. Dadurch wird das Lager zuverlässig vor dem magnetorheologischen Medium geschützt. Eine solche Ausgestaltung ermöglicht einen kompakten Aufbau und einen zuverlässigen Betrieb. Das Lager kann z. B. ein Gleit- oder Wälzlager sein.

Vorzugsweise ist die zylindrische Lauffläche gehärtet und/oder weist eine höhere Oberflächenqualität als die radial äußere Oberfläche der Aufnahme auf. Dadurch können Fertigungskosten verringert werden.

In vorteilhaften Ausgestaltungen weist die zylindrische Lauffläche einen Außendurchmesser auf, der wenigstens 3 mm kleiner ist als ein Außendurchmesser der Aufnahme des Halters.

In bevorzugten Ausgestaltungen weist die erste Bremskomponente eine Durchführung für eine mit der zweiten Bremskomponente drehfest verbundene Welle auf. Insbesondere ist die Durchführung zentral an der ersten Bremskomponente ausgebildet. Eine solche Ausgestaltungen ermöglicht es z. B., dass an der Welle ein Teil eines Winkelsensors (z.B. eines Drehgebers) angebracht ist. Dieser Teil des Winkelsensors ist dann geschützt vor der Außenumgebung aufgenommen. Der Winkelsensor kann beispielsweise noch innerhalb der magnetorheologischen Bremseinrichtung angeordnet sein, z. B. innerhalb des Halters. Es ist auch möglich, dass sich die Welle bis in die Konsole erstreckt, an der die magnetorheologische Bremseinrichtung befestigt ist. Dann kann ein Teil eines Winkelsensors innerhalb der Konsole geschützt aufgenommen sein.

Vorzugsweise ist der Halter an einer Konsole befestigt. An dem Halter oder der Konsole ist vorzugsweise ein weiterer Teil eines Winkelsensors befestigt. Beispielsweise kann an der Welle ein Magnetgeber und an dem Halter oder der Konsole ein Detektor befestigt sein, sodass bei einer Drehbewegung der Welle entsprechende Drehsignale erfasst werden können. Dabei kann eine relative Positionierung oder auch eine absolute Positionierung erfassbar sein. Vorzugsweise erzeugt der Drehgeber mehr als 10.000 Impulse (Inkremente) pro Umdrehung, besonders bevorzugt mehr als 30.000 Impulse (Inkremente).

Vorzugsweise ist an dem dem Halter gegenüberliegenden axialen Ende eine Benutzerschnittstelle, ein Bedienpanel, ein Display, ein berührungsempfindliches Display mit oder ohne haptischem Feedback und/oder wenigstens ein Sensor angebracht. Eine solche Ausgestaltung ermöglicht neben der Bedienung auch gleichzeitig die Anzeige oder Ausgabe von Informationen während der Bedienung. Damit wird beispielsweise ein Bedienknopf mit gleichzeitigem Ausgabedisplay ermöglicht.

In allen Ausgestaltungen ist es möglich, dass an dem Halter ein druckempfindlicher Sensor angebracht ist oder dem Halter ein solcher Sensor zugeordnet ist. Beispielsweise kann in dem Halter ein druckempfindlicher Sensor angebracht sein. Möglich ist es aber auch, dass ein Piezo-Sensor am Unterteil etc. angebracht ist. Der Halter kann auch zweiteilig ausgebildet sein und eine axiale Verschiebung der beiden Teile gegeneinander registrieren. Dabei kann eine haptische Rückmeldung erfolgen.

In allen Ausgestaltungen ist es bevorzugt, dass eine Differenz zwischen einem lichten Innendurchmesser des Hülsenteils und einem Außendurchmesser der ersten Bremskomponente größer 3 mm und kleiner 50 mm beträgt. Es ist ebenso bevorzugt, dass ein Außendurchmesser des Hülsenteils zwischen 15 mm oder 20 mm und 90 mm beträgt. Vorzugsweise beträgt eine Höhe des Hülsenteils zwischen 10 mm und 60 mm. In allen Ausgestaltungen ist es bevorzugt, dass eine Steuereinrichtung umfasst ist, welche dazu ausgebildet ist, mit der elektrischen Spule eine variable Bremswirkung hervorzurufen.

Insgesamt arbeitet die vorliegende Erfindung besonders bevorzugt nach dem Grundprinzip der Keilklemmung, wobei eine Übertragungskomponente und insbesondere ein Wälzkörper oder ein Drehkörper mit einem gewissen Abstand zu den Wänden darauf abrollt. Durch ein Magnetfeld entsteht der Keileffekt, sodass ein hohes Bremsmoment erzeugbar ist. Im Unterschied zum bisherigen Stand der Technik, wo eine radial um die Achse einer Bremskomponente herumgewickelte Spule ein Magnetfeld in axialer Richtung der Bremskomponente erzeugt, wird gemäß der vorliegenden Erfindung ein Magnetfeld quer zu (dem Kern) der ersten Bremskomponente erzeugt. Durch den Einsatz dieser axialen Spule kann eine bessere Skalierbarkeit erreicht werden. Dadurch wird es möglich, mittels längerer Wälzkörper und einer axial längeren elektrischen Spule ein skalierbares und größeres Bremsmoment erzeugt. Dabei muss der Durchmesser der ersten Bremskomponente nicht größer gewählt werden, um ein entsprechendes Magnetfeld durchzuleiten, denn mit einer axialen Verlängerung des Kerns wird auch die Fläche des Kerns (Querschnittsfläche) größer. Gegebenenfalls kann die axiale Länge auch reduziert werden, wenn nur ein relativ geringes Bremsmoment benötigt wird. Der Bauraum kann dementsprechend angepasst werden.

Ein weiterer Vorteil ist, dass auch für eine Großserie das Herausführen des elektrischen Anschlusskabels für die elektrische Spule einfach möglich ist. Es kann über einfache Mittel eine Dichtheit der magnetorheologischen Bremseinrichtung und ein Skalieren ermöglicht werden.

Grundsätzlich kann über längere Wälzkörper ein größeres Moment von der magnetorheologischen Bremseinrichtung erzeugt werden, da die Wirklänge steigt. Gleichzeitig wird durch die größere Kernfläche gewährleistet, dass die Wälzkörper immer einer entsprechenden magnetischen Flussdichte ausgesetzt werden. Die Magnetfeldstärke beim "Keil" an den Wälzkörpern kann höher gewählt werden als im Stand der Technik. Es können lange Wälzkörper eingesetzt werden, denen ein genügend starkes Magnetfeld zugeleitet werden kann.

Insbesondere geht das von elektrischen Spule erzeugte Magnetfeld radial durch den Kern, dann durch die Wälzkörper und schließt sich über das Hülsenteil bzw. den Außenzylinder. Dabei schließen sich die Magnetfeldlinien einmal in der einen und z. B. unteren und einmal in der anderen und z.B. oberen Hälfte des Hülsenteils. In einfachen Ausgestaltungen verläuft der Magnetfluss somit im Wesentlichen zweidimensional. Dabei ist es egal, wie lang oder hoch die Wälzkörper ausgebildet werden. Dadurch kann eine beliebige Skalierung in der Länge erreicht werden, da die Magnetfeldübertragungsfläche mit wächst. Bei konzentrisch um die Längsrichtung der ersten Bremskomponente gewickelten elektrischen Spulen (Stand der Technik) bleibt die Querschnittsfläche im Kern hingegen immer gleich und bildet insofern ein Nadelöhr für das Magnetfeld, solange der Durchmesser nicht verändert wird. Ein größerer Durchmesser der ersten Bremskomponente ändert aber auch den Bauraumbedarf, die Einbauabmessungen und das Gewicht der magnetorheologischen Bremseinrichtung. Außerdem ändern sich die Momentenabstände und die Drehzahlen der Wälzkörper, was nicht immer vorteilhaft ist. Bei einer linearen Verlängerung wie bei der vorliegenden Erfindung ändert sich dies hingegen nicht.

Werden längere Wälzkörper eingesetzt, so kann der Bremseffekt einer langen Walze besser sein als bei zwei kurzen, die die gleiche Gesamtlänge aufweisen. Das liegt unter anderem daran, dass die Flüssigkeit abstandsmässig länger verdrängt werden muss, da der Rand weiter entfernt ist (hydrodynamischer Druck).

In bevorzugten Ausgestaltungen weist die magnetorheologische Bremseinrichtung einen Durchmesser des Hülsenteils von zwischen etwa 10 und 40 mm (+/- 20%) auf in bevorzugten Ausgestaltungen etwa 25 mm.

In allen Ausgestaltungen ist es möglich, dass die elektrische Spule in axialer Richtung länger ausgebildet ist als die Wälzkörper. Dadurch wird eine Konzentration des Magnetfeldes an den Wälzkörpern erzielt.

Igesamt stellt die Erfindung eine vorteilhafte magnetorheologische Bremseinrichtung ("MRF Bremse") zur Verfügung. Dabei ist der Aussendurchmesser der MRF Bremse besonders bei haptischen Anwendungen meist vorgegeben. Hier gibt es ergonomische Richtlinien. Deshalb kann der Kernquerschnitt generell nicht so einfach vergrößert werden, weil damit der Aussendurchmesser auch größer wird (Knopfaussendurchmesser; Fläche für die Finger). Zudem benötigt man mit größer werdendem Aussendurchmesser wieder mehr Sperrmoment, da der Momentenabstand deswegen größer wurde (Die Fingerkraft, also die (Tangential)kraft zwischen den Betätigungsfinger(n) und dem Bremselement bzw. dem Außenoberfläche des Bremselements muss bzw. sollte gleich bleiben, da einerseits vom Benutzer nur eine bestimmte Kraft aufgebracht werden kann und die notwendigen Kräfte an den Fingern (Fingerspitzen) für das Wohlbefinden bei der Betätigung (Bedienquälität) wichtig sind).

Die elektrische Spule (Elektrospule) erstreckt sich bei der erfindungsgemäßen Lösung nun axial (im Unterschied zu Stand der Technik). Das von der Spule erzeugte Magnetfeld geht radial durch den Kern, dann durch die Wälzkörper und schließt sich über den Aussenzylinder (jeweils durch die entgegengesetzten Hälften). Dies bleibt immer gleich, egal wie hoch (oder lang) die Wälzkörper bzw. MRF Bremse ist.

Vorteilhaft ist, dass die MRF Bremse bzw. der haptische Knopf beliebig in der Länge skaliert werden kann, da die Magnetfeldübertragungsfläche mit wächst. Bei radialen elektrischen Spulen bleibt die Querschnittsfläche im Kern immer gleich und kann ein Nadelöhr für das Magnetfeld bilden, solange der Durchmesser nicht verändert wird. Wenn der Durchmesser geändert wird, ändert sich viel mit (Momentenabstände, Drehzahlen der Walzen...), was nicht immer vorteilhaft ist. Bei einer linearen Verlängerung der erfindungsgemäßen MRF Bremse ändert sich das nicht.

Die Erfindung erreicht das Ziel, eine möglichst einfache aber dennoch gut skalierbare MRF Bremse mit hohem Bremsmoment bei einem kompakten Außendurchmesser zu erhalten.

Die (in axialer Richtung) um den Kern gewickelte und vergossene axiale Elektrospule erzeugt ein Magnetfeld. Dieses schließt sich über die Wälzkörper und das Hülsenteil, das einen Aussenzylinder bildet, so wie zuvor beschrieben. Ein Vergießen der Elektrospule ist vorteilhaft, damit die MR-Flüssigkeit (Trägerflüssigkeit) nicht in die Leerräume zwischen den Spulendrähten gelangt (Kapillareffekt). Dies kann sonst zum Entmischen führen. Statt eine (zylindrischen) Spulendraht kann auch ein Flachmaterial aus Kupfer oder einem anderen geeigneten Werkstoff verwendet werden.

Der Kern, die Walzkörper und der Aussenzylinder können aus einem einfachem Stahl (z. B. S235), ohne große Anforderungen an die Oberflächenbeschaffenheit und -härte, gefertigt sein, welcher vorzugsweise gute magnetische Eigenschaften aufweist. Es können aber auch (mehrere übereinander gestapelte) Walzkörper oder Kugeln oder anders geformte Übertragungskomponenten verwendet werden. Es können Abstandshalter (Leitblech) zwischen den Wälzkörpern vorhanden sein.

Der Raum (Spalt) zwischen Kern und Aussenzylinder muss nicht zwingend (nahezu) komplett mit Walzkörpern gefüllt sein. Es können auch Distanzhalter zwischen den Walzkörpern oder ein oder mehrere Walzkörper aus magnetisch nicht leitendem Material - zusammen mit Walzkörpern aus magnetisch leitendem Material - verwendet werden.

Der Kern samt elektrischer Spule und Vergussmasse werden vorzugsweise in einem "Halter" zentriert und fixiert (kraftschlüssige oder formschlüssige Verbindung) und das Gegendrehmoment über diesen an die Konsole (Grundplatte; Aufnahmeplatte; Gehäuse) abgeleitet. Der Halter hat vorzugsweise eine Bohrung, durch welche die Kabel geführt werden. Vorzugsweise dichtet ein Dichtelement (z. B. O- Ring) das Kabel gegenüber dem Halter bzw. dem Innenraum ab, sodass vom Innenraum keine Flüssigkeit über das Kabel nach außen gelangen kann. Zusätzlich zum (Spulen-)Kabel kann auch ein Temperatursensorkabel oder anderes Sensorkabel durch diese Öffnung geführt werden. Die zylindrische Oberfläche des sich verjüngten Halters ist vorzugsweise so beschaffen, dass diese Laufeigenschaften hat (höhere Oberflächenhärte und geringe Oberflächenrauheit, beschichtet oder gehärtet oder ähnlich vergütet).

Der Halter kann auch aus einem anderen Material wie der Kern, Walzkörper oder Aussenzylinder hergestellt sein. Die Durchmesserreduktion des Halters an der Lauffläche hat den Vorteil, dass der Reibradius für das Dichtelement geringer wird, was die Gesamtreibung reduziert. Zudem kann wegen der dadurch erhöhten Bauhöhe ein Lagerelement verwendet werden, welches den gleichen Lageraussendurchmesser aufweist wie der Innendurchmesser des Hülsenteils. Dies reduziert die Herstellkosten vom Hülsenteil, es wird kein fertigungstechnischer Absatz (Eindrehung) benötigt. Die bevorzugte Walzkörperhöhe liegt zwischen 3 und 6 mm, kann aber auch 1 oder 2 mm sein. In diesem Bereich ist es schwierig, gute Lager oder Dichtelemente zu erhalten, wenn der Innendurchmesser vom Halter nicht zusätzlich Bauhöhe schafft.

Über dem Aussenzylinder kann ein dekoratives oder anderes Übertragungselement angebracht werden, z. B. ein gummierter Knopf.

Axial oben gesehen ist zwischen dem Aussenzylinder und der Vergussmasse vorzugsweise eine Kugel oder ein kugelförmiges kugelförmiges oder kugelähnliches Bauteil (kann auch eine Halbkugel sein). Dies führt die zwei Teile relativ zueinander.

Vorzugsweise ist die Kugel in der Vergussmasse fixiert und die innere axiale Stirnseite des Aussenzylinders dreht sich relativ dazu. Damit wird eine einfache, reibungsarme und kostengünstige Lagerung (Lagerstelle) geschaffen. Möglich ist auch eine Kegelform oder dergleichen. Statt dieser Art der Lagerung kann aber auch jede andere Art der Lagerung gewählt werden (z. B. Gleit- oder Wälzlagerung).

Zwischen dem Walzenunterteil und der Dichtung ist ein Raum. Dieser dient insbesondere als Reservoir und auch als Temperaturausgleichsraum. In diesem Raum kann auch ein Temperaturausgleichselement (z. B. mit Luft gefüllter O-Ring) untergebracht sein. Ebenfalls kann eine verschließbare Befüll- oder Entlüftungsöffnung in diesem Bereich im Hülsenteil (bzw. Aussenzylinder) angebracht sein.

Vorzugsweise besteht zumindest eine vom Magnetfeld durchflossene Komponente wenigstens teilweise oder vollständig aus dem Werkstoff FeSi3P.

Vorzugsweise ist wenigstens ein Mikrofon und/oder eine Geräuscherkennungseinrichtung und/oder eine Spracherkennungseinrichtung umfasst oder zugeordnet. Eine Recheneinrichtung kann auch umfasst sein. Die Auswertung von Geräuschen und/oder Sprachbefehlen kann lokal und/oder entfernt erfolgen. Beispielsweise kann eine Recheneinrichtung (Prozessor) lokal vorgesehen sein. Die Verarbeitung kann auch in einem entfernten Netzwerk durchgeführt werden und nur das Ergebnis - also der durchzuführende Befehl - zurückgemeldet werden.

Weitere Vorteile und Merkmale der vorliegenden Erfindung ergeben sich aus den Ausführungsbeispielen, welche im Folgenden mit Bezug auf die beiliegenden Figuren erläutert werden.

In den Figuren zeigen:
- Figur 1: eine stark schematische dreidimensionale Ansicht einer erfindungsgemäßen magnetorheologischen Bremseinrichtung;
- Figur 2: einen stark schematischen Querschnitt durch einen Wälzkörper einer magnetorheologischen Bremseinrichtung;
- Figur 3: einen schematischen Querschnitt durch eine erfindungsgemäße magnetorheologische Bremseinrichtung;
- Figur 4: einen um 90° gedrehten Querschnitt der magnetorheologischen Bremseinrichtung nach Fig. 3;
- Figur 5: eine Draufsicht auf die magnetorheologische Bremseinrichtung nach Figur 3 und 4;
- Figur 6: den Schnitt B-B aus Figur 5;
- Figur 7: einen Horizontalschnitt C-C durch die magnetorheologische Bremseinrichtung in mittlerer Höhe;
- Figur 8: einen Horizontalschnitt D-D ähnlich Figur 7 mit eingezeichneten Magnetfeldlinien;
- Figur 9: den Schnitt A-A nach Figur 5;
- Figur 10: einen Vertikalschnitt durch ein weiteres Ausführungsbeispiel einer erfindungsgemäßen magnetorheologischen Bremseinrichtung; und
- Figuren 11a-11c: mögliche Drehmomentverläufe über dem Drehwinkel einer erfindungsgemäßen magnetorheologischen Bremseinrichtung.

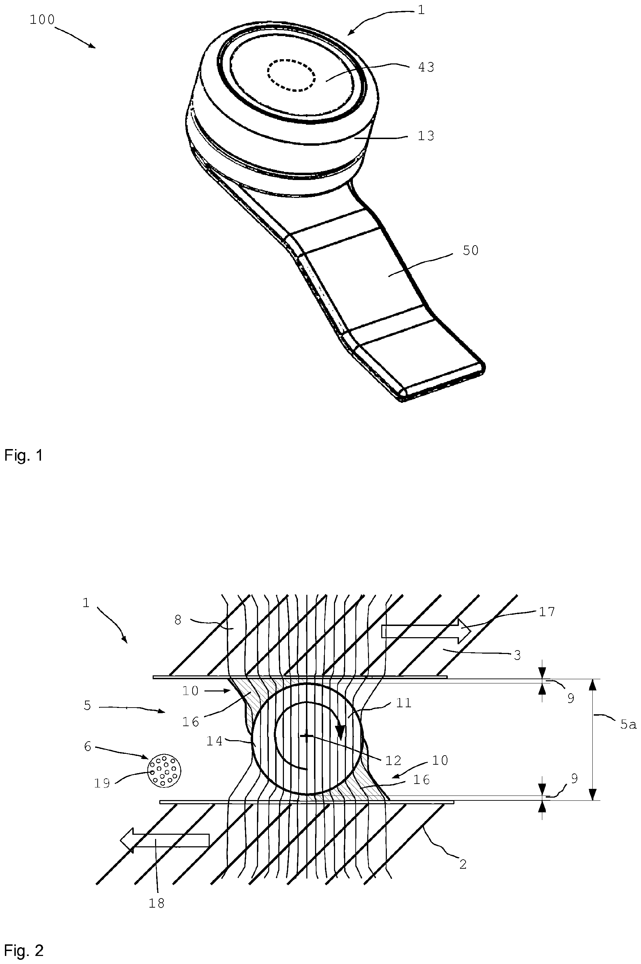

Figur 1 zeigt eine schematische perspektivische Darstellung einer magnetorheologischen Bremseinrichtung 1, die hier als haptischer Bedienknopf 100 ausgeführt ist und an einer Konsole 50 befestigt ist oder eine solche Konsole 50 umfasst. Die magnetorheologische Bremseinrichtung 1 weist ein Hülsenteil 13 auf, welches drehbar aufgenommen ist. Das zur Drehung des Hülsenteils 13 erforderliche Drehmoment ist einstellbar.

Auf der Oberseite der magnetorheologischen Bremseinrichtung 1 ist eine Benutzerschnittstelle 43 angeordnet. Eine solche Benutzerschnittstelle 43 kann beispielsweise als Anzeigeeinrichtung oder auch als berührungsempfindliche Eingabemöglichkeit (Touchpad, Bewegungs- und Gestensteuerung, Bilderkennung...)ausgebildet sein.

Der haptische Bedienknopf 100 kann beispielsweise zur Bedienung von Maschinen, Medizingeräten oder zur Verwendung im und für das Kraftfahrzeug eingesetzt werden. Möglich ist auch der Einsatz an sonstigen Geräten oder anderen Vorrichtungen.

Figur 2 zeigt eine stark schematische Querschnittsansicht einer erfindungsgemäßen magnetorheologischen Bremseinrichtung 1 zur Beeinflussung der Kraftübertragung zwischen zwei Bremskomponenten 2 und 3. Dabei ist zwischen den zwei Bremskomponenten 2 und 3 in Fig. 2 ein Wälzkörper bzw. Drehkörper 11 vorgesehen. Der Wälzkörper 11 ist hier als Kugel 14 ausgebildet. Möglich ist es aber ebenso, Wälzkörper 11 als Zylinder oder Ellipsoide, Rollen oder sonstige rotierbare Drehkörper auszubilden. Auch im eigentlichen Sinn nicht rotationssymmetrische Drehkörper wie beispielsweise ein Zahnrad oder Drehkörper 11 mit einer bestimmten Oberflächenstruktur können als Wälzkörper verwendet werden. Die Wälzkörper 11 werden nicht zur Lagerung gegenüber einander eingesetzt, sondern zur Übertragung von Drehmoment.

Zwischen den Bremskomponenten 2 und 3 ist ein Kanal 5 vorgesehen, der hier mit einem Medium 6 gefüllt ist. Das Medium ist hier ein magnetorheologisches Fluid, welches beispielsweise als Trägerflüssigkeit ein Öl umfasst, in dem ferromagnetische Partikel 19 vorhanden sind. Glykol, Fett, Wasser und dickflüssige Stoffe können auch als Trägermedium verwendet werden, ohne darauf beschränkt zu sein. Das Trägermedium kann auch gasförmig sein bzw. es kann auf das Trägermedium verzichtet werden (Vakuum). In diesem Fall werden lediglich durch das Magnetfeld beeinflussbare Partikel in den Kanal gefüllt.

Die ferromagnetischen Partikel 19 sind vorzugsweise Carbonyleisenpulver, wobei die Größenverteilung der Partikel vom konkreten Einsatzfall abhängt. Konkret bevorzugt ist eine Verteilung der Partikelgröße zwischen ein und zehn Mikrometern, wobei aber auch größere Partikel von zwanzig, dreißig, vierzig und fünfzig Mikrometer möglich sind. Je nach Anwendungsfall kann die Partikelgröße auch deutlich größer werden und sogar in den Millimeterbereich vordringen (Partikelkugeln). Die Partikel können auch eine spezielle Beschichtung/Mantel (Titanbeschichtung, Keramik-, Karbonmantel etc.) aufweisen, damit sie die je nach Anwendungsfall auftretenden hohen Druckbelastungen besser aushalten. Die magnetorheologischen Partikel können für diesen Anwendungsfall nicht nur aus Carbonyleisenpulver (Reineisen), sondern z. B. auch aus speziellem Eisen (härterem Stahl) hergestellt werden.

Der Wälzkörper 11 wird durch die Relativbewegung 17 der beiden Bremskomponenten 2 und 3 vorzugsweise in Rotation um seine Drehachse 12 versetzt und läuft praktisch auf der Oberfläche der Bremskomponente 3 ab. Gleichzeitig läuft der Wälzkörper 11 auf der Oberfläche der anderen Bremskomponente 2, sodass dort eine Relativgeschwindigkeit 18 vorliegt.

Genau genommen hat der Wälzkörper 11 keinen direkten Kontakt zur Oberfläche der Bremskomponenten 2 und/oder 3 und wälzt sich deshalb nicht direkt darauf ab. Der freie Abstand 9 von dem Wälzkörper 11 zu einer der Oberflächen der Bremskomponenten 2 oder 3 beträgt z. B. 140 µm. In einer konkreten Ausgestaltung mit Partikelgrößen zwischen 1 µm und 10 µm liegt der freie Abstand insbesondere zwischen 75 µm und 300 µm und besonders bevorzugt zwischen 100 µm und 200 µm.

Der freie Abstand 9 beträgt insbesondere wenigstens das Zehnfache des Durchmessers eines typischen mittleren Partikeldurchmessers. Vorzugsweise beträgt der freie Abstand 9 wenigstens das Zehnfache eines größten typischen Partikels. Durch den fehlenden direkten Kontakt ergibt sich eine sehr geringe(s) Grundreibung/-kraft/- moment beim relativen Bewegen der Bremskomponenten 2 und 3 zueinander.

Wird die magnetorheologische Bremseinrichtung 1 mit einem Magnetfeld beaufschlagt, bilden sich die Feldlinien abhängig vom Abstand zwischen den Wälzkörpern 11 und den Bremskomponenten 2, 3 aus. Der Wälzkörper 11 besteht aus einem ferromagnetischen Material und z. B. hier aus ST 37 (S2305). Der Stahltyp ST 37 hat eine magnetische Permeabilität µr von etwa 2000. Die Feldlinien (Magentkreis) treten durch den Wälzkörper hindurch und konzentrieren sich in dem Wälzkörper. An der hier radialen Ein- und Austrittsfläche der Feldlinien an dem Wälzkörper herrscht eine hohe magnetische Flußdichte in dem Kanal 5. Das dort inhomogene und starke Feld führt zu einer lokalen und starken Vernetzung der magnetisch polarisierbaren Partikel 19 (magnetische Verkettung). Durch die Drehbewegung des Wälzkörpers 11 in Richtung auf den sich bildenden Keil in dem magnetorheologischen Fluid wird die Wirkung stark erhöht und das mögliche Brems- oder Kupplungsmoment wird extrem vergrößert, weit über den Betrag hinaus, der normalerweise in dem magnetorheologischen Fluid erzeugbar ist. Vorzugsweise bestehen Wälzkörper 11 und Bremskomponenten 2, 3 zumindest teilweise aus ferromagnetischem Material, weshalb die magnetische Flussdichte umso höher wird, je kleiner der Abstand zwischen Drehkörper 11 und Bremskomponenten 2, 3 ist. Dadurch bildet sich ein im Wesentlichen keilförmiger Bereich 16 im Medium aus, in welchem der Gradient des Magnetfelds zum spitzen Winkel bei der Kontaktstelle bzw. dem Bereich des geringsten Abstands hin stark zunimmt.

Trotz Abstand zwischen Wälzkörper 11 und Bremskomponenten 2, 3 kann durch die Relativgeschwindigkeit der Oberflächen zueinander der Wälzkörper 11 in eine Drehbewegung versetzt werden. Die Drehbewegung ist ohne und auch mit einem wirkenden Magnetfeld 8 möglich.

Wenn die magnetorheologische Bremseinrichtung 1 einem Magnetfeld 8 einer hier in Figur 2 nicht dargestellten elektrischen Spule 26 ausgesetzt ist, verketten sich die einzelnen Partikeln 19 des magnetorheologischen Fluides 6 entlang der Feldlinien des Magnetfeldes 8. Zu beachten ist, dass die in Figur 2 eingezeichneten Vektoren den für die Beeinflussung des MRF relevanten Bereich der Feldlinien nur grob schematisch darstellen. Die Feldlinien treten im Wesentlichen normal auf die Oberflächen der ferromagnetischen Bauteile in den Kanal 5 ein und müssen vor allem im spitzwinkligen Bereich 10 nicht geradlinig verlaufen.

Gleichzeitig wird auf dem Umfang des Wälzkörpers 11 etwas Material von dem magnetorheologischen Fluid mit in Rotation versetzt, sodass sich ein spitzwinkliger Bereich 10 zwischen der Bremskomponente 3 und dem Wälzkörper 11 ausbildet. Auf der anderen Seite entsteht ein gleicher spitzwinkliger Bereich 10 zwischen dem Wälzkörper 11 und der Bremskomponente 2. Die spitzwinkligen Bereiche 10 können beispielsweise bei zylinderförmig ausgestalteten Wälzkörpern 11 eine Keilform 16 aufweisen. Durch die Keilform 16 bedingt wird die weitere Rotation des Wälzkörpers 11 behindert, sodass die Wirkung des Magnetfeldes auf das magnetorheologische Fluid verstärkt wird, da sich durch das wirkende Magnetfeld innerhalb des spitzwinkligen Bereiches 10 ein stärkerer Zusammenhalt des dortigen Mediums 6 ergibt. Dadurch wird die Wirkung des magnetorheologischen Fluids im angesammelten Haufen verstärkt (die Kettenbildung im Fluid und damit der Zusammenhalt bzw. die Viskosität), was die weitere Rotation bzw. Bewegung des Drehkörpers 11 erschwert.

Durch die Keilform 16 können wesentlich größere Kräfte oder Momente übertragen werden als es mit einem vergleichbaren Aufbau möglich wäre, der nur die Scherbewegung ohne Keileffekt nützt.

Die direkt durch das angelegte Magnetfeld übertragbaren Kräfte stellen nur einen kleinen Teil der durch die Vorrichtung übertragbaren Kräfte dar. Durch das Magnetfeld lässt sich die Keilbildung und somit die mechanische Kraftverstärkung steuern. Die mechanische Verstärkung des magnetorheologischen Effekts kann soweit gehen, dass eine Kraftübertragung auch nach Abschalten eines angelegten Magnetfeldes möglich ist, wenn die Partikel verkeilt wurden.

Es hat sich herausgestellt, dass durch die Keilwirkung der spitzwinkligen Bereiche 10 eine erheblich größere Wirkung eines Magnetfeldes 8 einer bestimmten Stärke erzielt wird. Dabei kann die Wirkung um ein Vielfaches verstärkt werden. In einem konkreten Fall wurde eine etwa zehnmal so starke Beeinflussung der Relativgeschwindigkeit zweier Bremskomponenten 2 und 3 zueinander wie beim Stand der Technik bei MRF Kupplungen nach dem Scherprinzip beobachtet, bei dem zwischen zwei sich zueinander bewegenden Flächen ein magnetorheologisches Fluid angeordnet ist und den Scherkräften der sich zueinander bewegenden Flächen ausgesetzt ist. Die mögliche Verstärkung hier durch die Keilwirkung hängt von unterschiedlichen Faktoren ab. Gegebenenfalls kann sie durch eine größere Oberflächenrauhigkeit der Wälzkörper 11 noch verstärkt werden. Möglich ist es auch, dass auf der Außenoberfläche der Wälzkörper 11 nach außen ragende Vorsprünge vorgesehen sind, die zu einer noch stärkeren Keilbildung führen können.

Die Keilwirkung bzw. der Keileffekt verteilt sich flächig auf den Wälzkörper 11 und die Komponenten 2 oder 3.

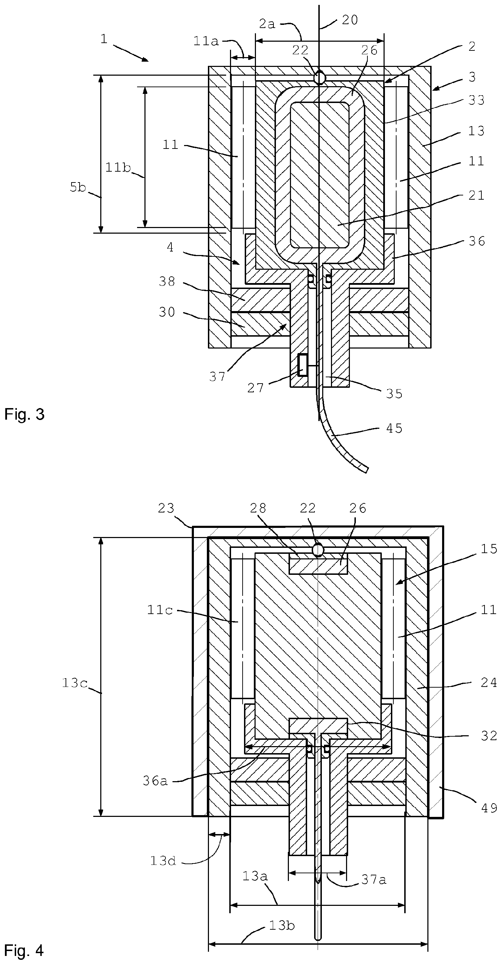

Figur 3 zeigt einen Vertikalschnitt durch eine magnetorheologische Bremseinrichtung 1, die über zwei Bremskomponenten 2 und 3 verfügt. Die erste Bremskomponente 2 ist hier im Inneren der zweiten Bremskomponente 3 angeordnet und wird durch einen Halter 4 formschlüssig und/oder kraftschlüssig gehalten. Der Halter 4 kann beispielsweise an einer externen Konsole befestigt werden. Der Halter 4 wird regelmäßig drehfest befestigt. Die zweite Bremskomponente 3 ist relativ zu der ersten Bremskomponente 2 drehbar daran aufgenommen.

Die zweite Bremskomponente 3 ist sternförmig ausgebildet und verfügt über das Hülsenteil 13 und einen das Hülsenteil 13 nach oben abschließenden Deckel. Die zweite Bremskomponente 3 ist deshalb nur von dem hier unteren Ende aus zugänglich, durch welches die erste Bremskomponente 2 mit dem Halter 4 eingeführt wird. Im Bereich des unteren Endes der ersten Bremskomponente 2 ist eine zylindrische Lauffläche 37 an dem Halter 4 ausgebildet. Dort liegt eine gehärtete Oberfläche oder eine Oberfläche entsprechender Güte vor. An dieser zylindrischen Lauffläche 37 ist ein Lager 30 zur drehbaren Lagerung der zweiten Bremskomponente 3 angebracht. In der axialen Richtung 20 weiter nach innen ist benachbart zu dem Lager 30 eine Dichtung 38 vorgesehen. Die Dichtung 38 dichtet das Innere zuverlässig ab.

Dadurch, dass nur eine Dichtung 38 nach außen vorgesehen ist, wird ein niedriges Grundmoment benötigt, um bei abgeschaltetem Magnetfeld die zweite Bremskomponente 3 zu drehen.

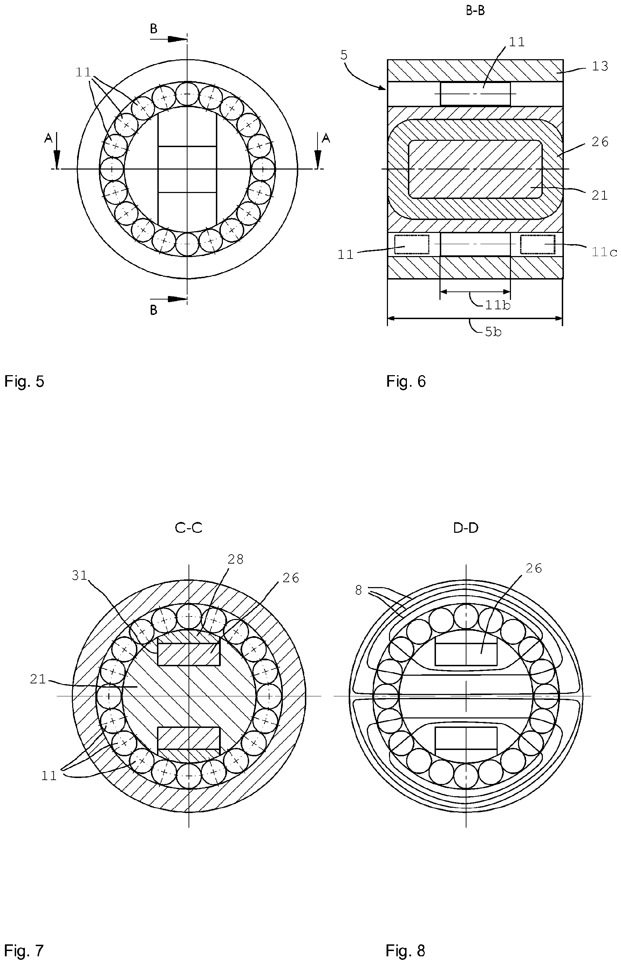

Die erste Bremskomponente 2 weist einen zylindrischen Grundkörper 33 auf, der über Axialnuten 31 und Quernuten 32 verfügt (vergleiche Figur 7 und Figur 4) in den Axialnuten 31 und Quernuten 32 sind die Wicklungen der elektrischen Spule 26 gewickelt, sodass die einzelnen Windungen der elektrischen Spule 26 nicht nach außen aus dem zylindrischen Grundkörper 33 hervorstehen. Hier im Ausführungsbeispiel sind die Axialnuten 31 und die Quernuten 32 anschließend durch eine Vergussmasse verfüllt, sodass sich insgesamt ein zylindrischer Körper der ersten Bremskomponente 2 ergibt.

Am oberen Ende der ersten Bremskomponente 2 ist zentrisch eine Kugel 22 (oder Halbkugel) angeordnet oder halb eingegossen, um auf eine einfache Art und Weise eine zweite Lagerung zwischen der ersten Bremskomponente 2 und der zweiten Bremskomponente 3 zur Verfügung zu stellen.

Radial besteht zwischen der Außenwandung der ersten Bremskomponente 2 und der inneren Wandung des Hülsenteils 13 ein Spalt 5, der hier im Wesentlichen als hohlzylindrischer Spalt ausgeführt ist. In dem Spalt sind mehrere Übertragungskomponenten 11, die hier als Wälzkörper ausgebildet sind, angeordnet. Die Wälzkörper 11 sind hier als zylindrische Wälzkörper ausgebildet und weisen einen Außendurchmesser auf, der etwas geringer ist als die Spaltenbreite des Spaltes 5. Der Spalt 5 ist des Weiteren hier mit einem magnetorheologischen Medium gefüllt. Im unteren Bereich des Spaltes kann beispielsweise ein mit Luft oder einem anderen Gas gefüllter O-Ring oder dergleichen angeordnet sein, der einen Volumenausgleich bei Temperaturschwankungen zur Verfügung stellt. Außerdem wird dadurch dort ein Reservoir gebildet, falls im Laufe des Betriebes magnetorheologisches Fluid bzw. Medium aus dem Inneren nach außen austritt.

Die (nutzbare) Spaltlänge 5b des Spaltes 5 ist hier größer als die Länge 11b der Wälzkörper 11. Hier ist auch die elektrische Spule in der axialen Richtung 20 länger ausgebildet als die Länge 11b der Wälzkörper 11.

Im Inneren der elektrischen Spule 26 ist der Kern 21 zu erkennen. Der Halter 4 weist eine radial vergrößerte Aufnahme 36 zur drehfesten Aufnahme der ersten Bremskomponente 2 auf. Durch den Halter 4 erstreckt sich eine Kabeldurchführung nach unten durch den Halter 4 hindurch. Dort werden Kabel 45 zum Anschluss der elektrischen Spule 26 und gegebenenfalls Sensorleitungen herausgeführt. Eine Steuereinrichtung 27 kann im Fuß des Halters 4 oder an anderen geeigneten Stellen vorgesehen sein, um eine bedarfsgerechte Steuerung vorzunehmen.

Figur 4 zeigt einen um 90° versetzten Schnitt durch die magnetorheologische Bremseinrichtung 1 gemäß Figur 3, wobei hier die Quernuten 32 erkennbar sind, in denen die elektrische Spule 26 gewickelt ist. In axialer Richtung ist an beiden Enden jeweils Vergussmasse 28 vorgesehen. Im Bereich der Kabeldurchführung 35 ist eine separate Dichtung über beispielsweise den eingezeichneten O-Ring oder dergleichen vorgesehen.

Es ist auch möglich, dass einzelne der über dem Umfang verteilt angeordneten Wälzkörper als magnetisch nicht leitfähige Übertragungskomponenten 11c ausgebildet sind. Möglich ist es aber auch, dass alle Wälzkörper aus magnetisch leitendem Material sind. Werden einzelne Wälzkörper aus magnetisch nicht leitendem Material gefertigt, so führt dies zu einer Konzentration des Magnetfeldes an den magnetisch leitenden Wälzkörpern, wodurch ein noch stärkeres Bremsmoment erzeugbar sein kann.

Eine Länge bzw. Höhe 13c des Hülsenteils 13 oder der zweiten Bremskomponente 3 in axialer Richtung 20 beträgt vorzugsweise zwischen 10 mm und 60 mm. Außen kann auf der zweiten Bremskomponente 3 ein Überzug 49 angebracht sein, sodass das äußere Erscheinungsbild des Drehknopfes 23 im Wesentlichen durch die Oberfläche des Überzugs 49 bestimmt wird.

Das Material des Hülsenteils 13 ist magnetisch leitend und dient zur Schließung des Magnetkreises. Eine Wandstärke 13d des Hülsenteils 13 ist vorzugsweise wenigstens halb so groß wie ein Durchmesser 11a der Wälzkörper 11.

Der Durchmesser 36a der Aufnahme 36 ist vorzugsweise erheblich größer als der Durchmesser 37a der zylindrischen Lauffläche 37. Dadurch wird die Reibung an der Dichtung 38 reduziert. Außerdem können standardisierte Lager eingesetzt werden.

Es ist auch möglich den Kern 21 zweiteilig auszuführen. Bevorzugt verläuft die Trennung entlang der in Figur 4 gezeichneten Mittellinie, wodurch sich eine linke und rechte (Kern)hälfte ergibt. Die zwei Kernhälften können durch ein magnetisch nicht leitendes Element (z.B. Dichtung) voneinander beabstandet sein. Vorzugsweise ist das Vergussmassenvolumen 28 dann ein Teil der Kernhälfte(n), wodurch sich ein Halbkreiselement mit einer umlaufenden Nut auf der Trennfläche für die Elektrospule ergibt. Weiters bevorzugt wird die Aufnahme 36 auch in zwei Hälften getrennt. Eine Aufnahmehälfte kann auch mit einer Kernhälfte einen Teil bilden (einteilig ausgeführt werden) oder eine Kernhälfte mit einer kompletten Aufnahmeeinheit 36 einteilig ausgeführt werden.

Figur 5 zeigt eine Draufsicht auf die magnetorheologische Bremseinrichtung 1, wobei die Wälzkörper 11 erkennbar sind. Zentral ist der zylindrische Grundkörper mit der elektrischen Spule 26 zu erkennen.

Figur 6 zeigt den Schnitt B- B gemäß Figur 5. In dem Spalt 5 sind die Wälzkörper 11 angeordnet, die hier eine (relativ kurze) Länge 11b aufweisen, die erheblich kürzer ist als die Spaltlänge 5b. Wie im unteren Teil von Figur 6 dargestellt, können axial hintereinander mehrere Wälzkörper vorgesehen sein, von denen einige auch magnetisch nicht leitfähig sind, wie der gepunktet eingezeichnete Wälzkörper 11c anzeigt. Zentral ist der Kern 21 zu erkennen, der von der Spule 26 umgeben ist.

Figur 7 zeigt einen Horizontalschnitt in einer mittleren Höhe der magnetorheologischen Bremseinrichtung 1, wobei die Axialnuten 31 erkennbar sind, in denen die Windungen der elektrischen Spule 26 gewickelt sind. Zum Abdichten und Abschließen ist die Nut mit Vergussmasse 28 gefüllt, sodass sich insgesamt eine zylindrische Ausgestaltung der ersten Bremskomponente 2 ergibt.

Figur 8 zeigt im Prinzip die gleiche Darstellung wie Figur 7, nur sind der besseren Übersichtlichkeit halber die Schraffuren weggelassen und dafür Magnetfeldlinien des Magnetfeldes 8 eingezeichnet. Das Magnetfeld erstreckt sich quer zur Längsrichtung durch den Kern 21 und tritt hier etwa horizontal an beiden Enden aus dem Kern 21 durch die Wälzkörper 11 durch und tritt dann in das Hülsenteil 13 ein. Die Magnetfeldlinien schließen sich, wie in Figur 8 dargestellt. Dabei werden mehrere Wälzkörper einem Magnetfeld ausgesetzt, sodass an mehreren - aber nicht allen - Wälzkörpern jeweils der Keileffekt auftritt. Die Wälzkörper im Bereich der Vergussmasse sind im Wesentlichen frei von Magnetfeld.

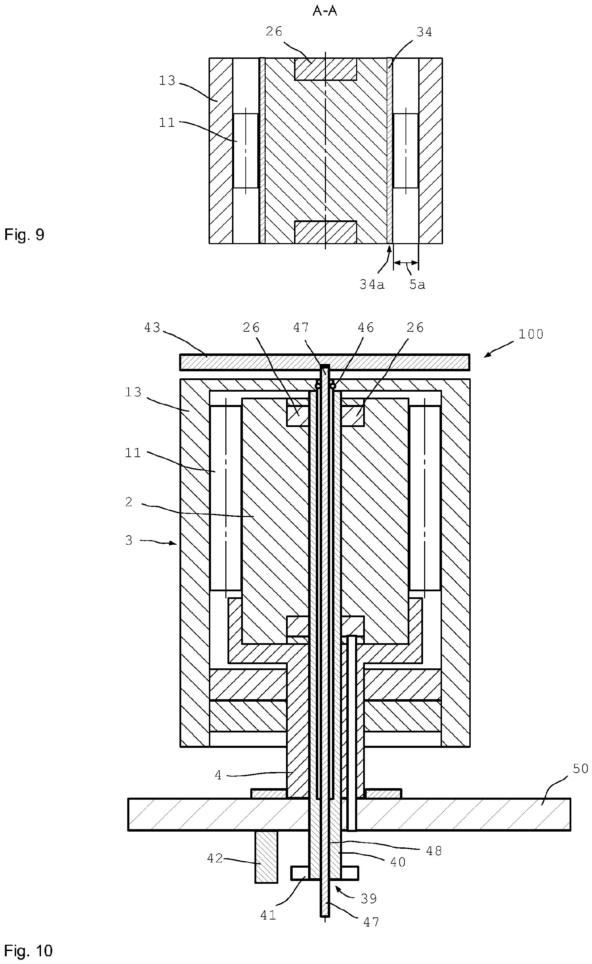

Figur 9 zeigt den Querschnitt A-A aus Figur 5, wobei zentral der Kern 21 mit der Spule 26 zu erkennen ist. Figur 9 zeigt gestrichelt eine Variante, bei der die erste Bremskomponente 2 von einem Hülsenkörper 34 umgeben ist. Der Hülsenkörper 34 weist eine radiale Dicke 34a auf, die erheblich geringer ist als die Spaltweite 5a oder als ein Durchmesser 11a der Wälzkörper 11. Der Hülsenkörper 34 besteht aus einem magnetisch leitenden Material. Dadurch wird nach dem Anlegen eines Magnetfeldes ein (sehr geringer) Teil des Magnetfeldes direkt kurzgeschlossen. Da die Wandstärke des Hülsenkörpers 34 sehr gering gewählt wird und hier nicht maßstäblich dargestellt ist, fällt dieser (geringfügige) magnetische Kurzschluss nicht negativ ins Gewicht. Vorteilhaft ist hingegen, dass dadurch eine metallische Oberfläche auf dem vollständigen Umfang der ersten Bremskomponente 2 zur Verfügung gestellt werden kann, wodurch eventuell auftretender Verschleiß im Bereich der Vergussmasse vermieden werden kann. Gegebenenfalls kann beim Einsatz eines derartigen Hülsenkörpers 34 auch auf das Abfüllen mit einer Vergussmasse 28 vollständig verzichtet werden, was auch den Aufwand beim Herstellen senkt. Dann wird an den axialen Enden der Spule ein Deckel aufgesetzt, damit das Innere abgedichtet wird, um den Eintritt von MRF zu verhindern.

Figur 10 zeigt schließlich ein weiteres Ausführungsbeispiel einer magnetorheologischen Bremseinrichtung 1, die hier ebenfalls als haptischer Bedienknopf 100 ausgeführt ist. Grundsätzlich funktioniert die magnetorheologische Bremseinrichtung 1 gemäß Figur 10 genauso wie in den zuvor beschrieben Ausführungsbeispielen. Ein Unterschied zu den vorangegangenen Ausführungsbeispielen ist, dass eine zentrale Durchführung 39 vorgesehen ist, durch welche ein Stützelement 47 inklusive (wenigstens) einer Zuleitung durchgeführt ist. Wenigstens ein Dichtring 46 kann zur Abdichtung vorgesehen sein. Das Stützelement 47 kann beispielsweise an der Konsole oder dergleichen verankert werden und trägt eine Benutzerschnittstelle 43, auf der z. B. ein (berührungsempfindliches) Display oder ein Eingabeelement vorgesehen ist.

Ein weiterer Unterschied ist, dass eine Welle 40 vorgesehen ist, die hier hohl ausgebildet ist. Die Welle 40 ist drehfest mit der zweiten Bremskomponente 3 verbunden, sodass sich bei einer Drehung der zweiten Bremskomponente 3 auch die (hohl ausgeführte) Welle 40 dreht. Mit der Drehung der Welle 40 dreht sich auch der damit drehfest verbundene Teil 41 eines Winkelsensors. Z. B. kann das Teil 41 als Magnetgeber oder dergleichen ausgeführt sein. Das Teil 41 wirkt mit dem Teil 42 eines Winkelsensors zusammen, welches beispielsweise als Detektor ausgeführt sein kann. Dadurch wird bei Drehung der zweiten Bremskomponente 3 ein Signal durch den Sensor 41, 42 erfasst. Dabei kann ein relatives oder auch ein absolutes Winkelsignal erfasst werden. Ein erheblicher Vorteil einer solchen Ausgestaltung mit einer Welle 40 besteht darin, dass der Winkelsensor geschützt innerhalb der Konsole aufgenommen ist. Dadurch gerät keine Verschmutzung von außen an den Sensor, sodass ein zuverlässiger Betrieb gewährleistet werden kann. Möglich ist es gegebenenfalls auch, die Teile 41 und 42 im Inneren des Halters 4 anzuordnen.

Falls nur ein Winkelsensor 41, 42 vorgesehen werden soll, ist es nicht nötig, dass die Welle 40 hohl ausgebildet ist und zur Durchführung eines Stützelements 47 für ein Display/Eingabeelement dient. Die Welle 40 kann auch massiv ausgebildet sein. Dann muss ein Display entweder anders befestigt und versorgt werden oder es muss darauf verzichtet werden.

Die Benutzerschnittstelle 43 kann auch als Druck-/oder Zugelement genutzt werden, welcher über das Stützelement 47 die Bewegung an einen untenliegenden (evtl. unter der Konsole 50 liegenden) Encoder/Schalter überträgt.

Es ist auch möglich, die ganze Bremseinheit relativ zur Konsole 50 in axialer Richtung als auch in radialer Richtung zu bewegen(Push/Pull), als auch die ganze Einheit mit oder ohne Konsole in radiale oder axiale Richtung zu bewegen.

Umgekehrt ist es auch möglich, eine Durchführung ohne Hohlwelle vorzusehen. Beispielsweise wenn auf die geschützte Anbringung eines Winkelsensors verzichtet wird oder eine Winkelposition anders erfasst wird.

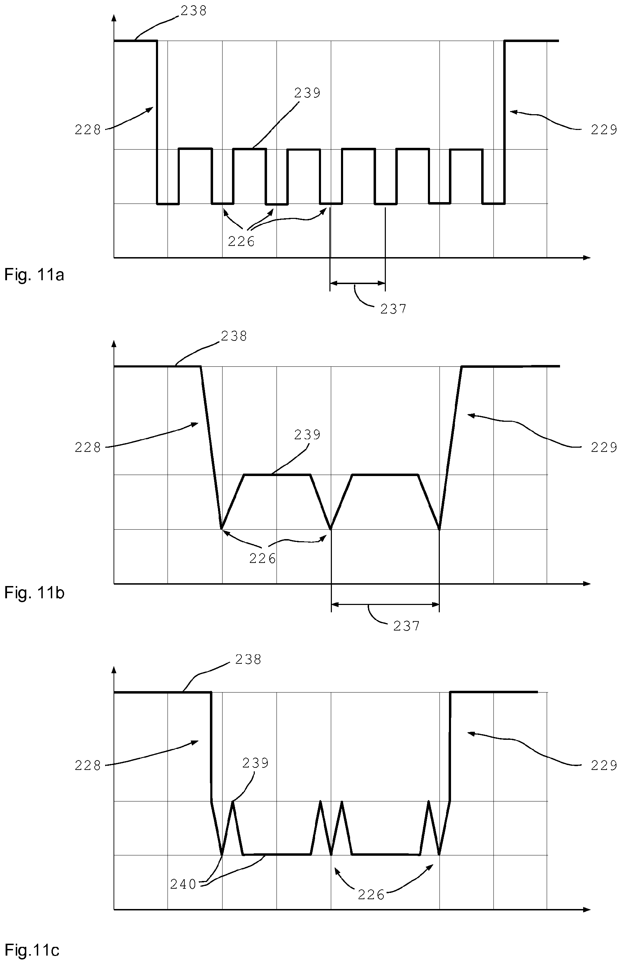

In den Figuren 11a, 11b und 11c sind mögliche Ausführungsvarianten zur Steuerung eines dynamisch erzeugten Magnetfeldes bzw. eines dynamisch erzeugten Bremsmoments in Abhängigkeit von dem Drehwinkel dargestellt.

Figur 11a zeigt dabei eine Variante, bei der ein Drehknopf als haptische Bedienhilfe eingesetzt wird. Dargestellt ist der Drehwiderstand über dem Drehwinkel. Mit der Steuerung 27 kann ein linker Endanschlag 228 und ein rechter Endanschlag 229 erzeugt werden. Beim Weiterdrehen des Drehknopfes 23 wird dort ein hohes Magnetfeld bzw. Anschlagmoment 238 erzeugt, wodurch der Drehknopf 23 einen hohen Widerstand gegenüber einer Drehbewegung entgegensetzt. Der Benutzer erhält die haptische Rückmeldung eines Endanschlags.

Dabei kann eine Rasterung der Drehbewegung erfolgen bzw. erzeugt werden. Beispielsweise kann dies verwendet werden, um durch ein grafisches Menü zu navigieren und Menüpunkte auszuwählen. Hier ist direkt neben dem linken Endanschlag 228 ein erster Rasterpunkt 226 vorgesehen, der bei einer Bedienung z. B. einem ersten Menüpunkt entspricht. Soll der nächste Menüpunkt angewählt werden, so muss der Drehknopf 100 im Uhrzeigersinn gedreht werden. Dazu muss das dynamisch erzeugte höhere Magnetfeld bzw. Rastmoment 239 bzw. dessen Reibmoment überwunden werden, bevor der nächste Rasterpunkt 226 erreicht wird. In Figur 11a wird für einen gewissen Winkelbereich jeweils an den Rasterpunkten 226 und an den dazwischenliegenden Bereichen ein jeweils konstantes Magnetfeld erzeugt, welches an den Rasterpunkten erheblich geringer ist als in den dazwischenliegenden Bereichen und nochmals deutlich geringer als an den Anschlägen 228, 229.

Ein Winkelabstand 237 zwischen einzelnen Rasterpunkten ist dynamisch veränderbar und wird an die Anzahl der zur Verfügung stehenden Rasterpunkte bzw. Menüpunkte angepasst.

Figur 11b zeigt eine Variante, bei der zu den Endanschlägen 228, 229 hin das Magnetfeld nicht schlagartig ansteigt, sondern einen steilen Verlauf nimmt. Weiterhin sind an den Rasterpunkten 226 zu beiden Drehseiten hin jeweils rampenartige Steigungen des Magnetfeldes vorgesehen, wodurch der Drehwiderstand in die entsprechenden Drehrichtungen hin zunimmt. Hier werden mit der gleichen Bedieneinrichtung 100 nur drei Rasterpunkte 226 zur Verfügung gestellt, deren Winkelabstand 237 größer ist als in dem Beispiel gemäß Figur 11a.

Figur 11c zeigt eine Variante, bei der zwischen einzelnen Rasterpunkten 226 ein geringerer Drehwiderstand vorliegt und nur direkt benachbart zu den Rasterpunkten 226 jeweils ein erhöhtes Magnetfeld 239 erzeugt wird, um ein Einrasten an den einzelnen Rasterpunkten 226 zu ermöglichen und gleichzeitig nur einen geringen Drehwiderstand zwischen einzelnen Rasterpunkten zur Verfügung zu stellen.

Grundsätzlich ist auch eine Mischung der Betriebsweisen und der Magnetfeldverläufe der Figuren 11a, 11b und 11c möglich. Z. B. kann bei unterschiedlichen Untermenüs eine entsprechend unterschiedliche Einstellung des Magnetfeldverlaufes erfolgen.

Möglich ist es in allen Fällen auch, dass bei z. B. einem Ripple (Raster) nicht wie bislang zwischen wenig und mehr Stromstärke mit gleicher Polung geschaltet wird (also z. B. +0,2 auf +0,8A = Rippel), sondern abwechslungsweise mit verändertet Polung, d. h. von +0,2 auf +0,8A und dann den nächsten Rippel mit -0,2A auf - 0,8A und dann die nächste Momentenspitze von +0,2 auf +0,8A usw.

Möglich ist in allen Fällen auch, dass die Betriebsweisen der Figuren 11a, 11b und 11c oder eine Mischung der Betriebsweisen durch Sprachbefehle ausgewählt werden. Der Benutzer wählt per Spracheingabe (mit lokaler oder entfernter Spracherkennung, z.B. über Alexa, Amazon Echo, Siri, Google Spracheingabe...) eine Funktion (Lautstärke, Senderwahl...) aus. Die magnetorheologische Bremseinrichtung stellt dann einen entsprechende Betriebsweise zur Verfügung (Lautstärke = Raster mit zunehmendem Bremsmoment für zunehmende Lautstärke; Radiosenderauswahl = Raster mit verschiedener Schrittweite, dazwischen geringes Bremsmoment, bis Sender gefunden wird).

Der vorzugsweise niederlegierte Stahl kann ein Restmagnetfeld behalten. Der Stahl wird vorzugsweise regelmäßig oder bei Bedarf entmagnetisiert (u.a. durch ein spezielles Wechselfeld).

Bevorzugt wird für die vom Magnetfeld durchflossenen Komponenten der Werkstoff FeSi3P (Siliziumstahl bzw. Silicon Steel) oder ein artverwandter Werkstoffe verwendet.

In allen Fällen kann eine Sprach- oder Geräuschsteuerung durchgeführt werden. Mit der Sprachsteuerung kann die Bremseinrichtung adaptiv gesteuert werden.

Wenn die Dreheinheit nicht gedreht wird, d. h. der Winkel ist konstant, wird vorzugsweise über die Zeit der Strom kontinuierlich verringert. Der Strom kann auch geschwindigkeitsabhängig (Drehwinkelgeschwindigkeit der Dreheinheit) variiert werden.

**Bezugszeichenliste:**

| | | | |
|---|---|---|---|
| 1 | Magnetorheologische | 23 | Drehknopf |
| | Bremseinrichtung | 24 | Außenring |
| 2 | Bremskomponente | 26 | Spule |
| 2a | Außendurchmesser | 27 | Steuereinrichtung |
| 3 | Bremskomponente | 28 | Vergussmasse |
| 4 | Halter | 30 | Lager |
| 5 | Spalt, Kanal | 31 | Axialnut |
| 5a | Spaltbreite | 32 | Quernut |
| 5b | Spaltlänge, Spalthöhe | 33 | zylindrische Grundkörper |
| 6 | Medium | 34 | Hülsenkörper |
| 8 | Feld | 34a | radiale Dicke von 34 |
| 9 | freier Abstand | 35 | Kabeldurchführung |
| 10 | spitzwinkliger Bereich | 36 | Aufnahme |
| 11 | Übertragungskomponente, Wälzkörper, Drehkörper | 36a | Außendurchmesser |
| | | 37 | zylindrische Lauffläche |
| 11a | Durchmesser von 11 | 37a | Außendurchmesser |
| 11b | Länge von 11 | 38 | Dichtung |
| 11c | magnetisch nicht leitfähige Übertragungskomponente | 39 | Durchführung |
| | | 40 | Welle |
| | | 41 | Teil eines Winkelsensors |
| 12 | Drehachse | 42 | Teil eines Winkelsensors |
| 13 | Hülsenteil | 43 | Benutzerschnittstelle |
| 13a | Innendurchmesser | 45 | Kabel |
| 13b | Außendurchmesser | 46 | Dichtring |
| 13c | Höhe | 47 | Stützelement und Zuleitung |
| 13d | Wandstärke | | |
| 14 | Kugel | 48 | Gleitführung |
| 15 | Zylinder | 49 | Überzug |
| 16 | Keilform | 50 | Konsole |
| 17 | Richtung der Relativbewegung | 100 | Haptischer Bedienkopf |
| | | 226 | Rasterpunkt |
| 18 | Richtung der Relativbewegung | 228 | Endanschlag |
| | | 229 | Endanschlag |
| 19 | magnetische Partikel | 237 | Winkelabstand |
| 20 | axiale Richtung | 238 | Anschlagmoment |
| 21 | Kern | 239 | Rastermoment |
| 22 | Kugel zu Lagerung von 3 | 240 | Grundmoment |

## Patentansprüche

1. Magnetorheologische Bremseinrichtung (1) mit einem feststehenden Halter (4) und mit wenigstens zwei Bremskomponenten (2, 3), wobei eine erste Bremskomponente (2) mit dem Halter (4) drehfest verbunden ist und sich in axialer Richtung (20) erstreckt und wobei die zweite Bremskomponente (3) ein sich um die erste Bremskomponente (2) herum drehbares und hohl ausgebildetes Hülsenteil (13) umfasst, wobei zwischen der ersten und der zweiten Bremskomponente (2, 3) ein Spalt (5) ausgebildet ist, in welchem Spalt (5) wenigstens eine, zwei oder mehr drehbare Übertragungskomponenten (11) angeordnet ist, und wobei der Spalt (5) wenigstens zum Teil mit einem magnetorheologischen Medium (6) gefüllt ist,
**dadurch gekennzeichnet,**
**dass** die erste Bremskomponente (2) einen sich in der axialen Richtung (20) erstreckenden Kern (21) aus einem magnetisch leitfähigem Material und eine elektrische Spule (26) umfasst, die in axialer Richtung (20) um den Kern (21) gewickelt ist, sodass sich ein Magnetfeld (8) der elektrischen Spule (26) quer durch die erste Bremskomponente (2) erstreckt.

2. Magnetorheologische Bremseinrichtung (1) nach Anspruch 1, wobei wenigstens eine Übertragungskomponente (11) als Wälzkörper ausgebildet ist und wobei insbesondere wenigstens ein Wälzkörper (11) einen zylindrischen oder kugelförmigen oder runden oder abgerundeten Querschnitt aufweist.

3. Magnetorheologische Bremseinrichtung (1) nach einem der vorhergehenden Ansprüche, wobei wenigstens ein Teil der Übertragungskomponenten (11) aus einem magnetisch leitfähigen Material besteht.

4. Magnetorheologische Bremseinrichtung (1) nach einem der vorhergehenden Ansprüche, wobei wenigstens ein Teil der Übertragungskomponenten (11c) aus einem magnetisch nicht leitfähigen Material besteht.

5. Magnetorheologische Bremseinrichtung (1) nach einem der vorhergehenden Ansprüche, wobei das Hülsenteil (13) an einem Drehknopf (23) ausgebildet ist.

6. Magnetorheologische Bremseinrichtung (1) nach einem der vorhergehenden Ansprüche, wobei das Hülsenteil (13) aus einem magnetisch leitenden Material besteht und einen Außenring (24) für das Magnetfeld zur Verfügung stellt und wobei insbesondere wenigstens eine radiale Wandstärke (13a) des Hülsenteils (13) wenigstens halb so groß ist wie eine Spaltbreite (5a) des Spaltes (5) und/oder ein Durchmesser (11a) einer Übertragungskomponente (11).

7. Magnetorheologische Bremseinrichtung (1) nach einem der vorhergehenden Ansprüche, wobei eine Länge (2a) der ersten Bremskomponente (2) in der axialen Richtung (20) größer ist als eine Länge (11b) einer Übertragungskomponente (11) in der axialen Richtung (20) und/oder wobei eine Länge (5b) des Spaltes (5) in der axialen Richtung (20) wenigstens doppelt so groß ist wie eine Länge (11b) einer Übertragungskomponente (11) in der axialen Richtung (20).

8. Magnetorheologische Bremseinrichtung (1) nach einem der vorhergehenden Ansprüche, wobei die erste Bremskomponente (2) im Wesentlichen zylindrisch ausgebildet ist und einen zylindrischen Grundkörper (33) als Kern (21) und die elektrische Spule (26) umfasst und wobei insbesondere die elektrische Spule (26) in Axialnuten (31) und/oder Quernuten (32) des zylindrischen Grundkörpers (33) gewickelt ist und wobei vorzugsweise die Axialnuten (31) und/oder die Quernuten (32) wenigstens teilweise mit Vergussmasse (28) gefüllt sind.

9. Magnetorheologische Bremseinrichtung (1) nach Anspruch 8, wobei der zylindrische Grundkörper (33) von einem Hülsenkörper (34) umgeben ist, der fest mit dem zylindrischen Grundkörper (33) verbunden ist, wobei eine radiale Dicke (34a) des Hülsenkörpers (34) kleiner ist als die Hälfte der radialen Spaltbreite (5a) des Spalts (5).

10. Magnetorheologische Bremseinrichtung (1) nach einem der vorhergehenden Ansprüche, wobei der Halter (4) eine Kabeldurchführung (35) aufweist.

11. Magnetorheologische Bremseinrichtung (1) nach einem der vorhergehenden Ansprüche, wobei der Halter (4) eine Aufnahme (36) zur drehfesten Verbindung mit der ersten Bremskomponente (2) aufweist und wobei der Halter (4) eine zylindrische Lauffläche (37) für ein Lager (30) aufweist und das Hülsenteil (13) drehbar auf dem Halter (4) abstützt und wobei insbesondere an der zylindrischen Lauffläche (37) eine Dichtung (38) zum Abdichten des Spaltes (5) angeordnet ist, wobei die Dichtung (38) näher an dem Spalt (5) angeordnet ist als das Lager (30) und wobei vorzugsweise die zylindrische Lauffläche (37) gehärtet ist und/oder eine höhere Oberflächenqualität als die radial äußere Oberfläche der Aufnahme aufweist und wobei insbesondere die zylindrische Lauffläche (37) einen Außendurchmesser (37a) aufweist, der wenigstens 3 mm kleiner ist als ein Außendurchmesser (36a) der Aufnahme (36) des Halters.

12. Magnetorheologische Bremseinrichtung (1) nach einem der vorhergehenden Ansprüche, wobei die erste Bremskomponente (2) eine Durchführung (39) für eine mit der zweiten Bremskomponente (3) drehfest verbundene Welle (40) aufweist.

13. Magnetorheologische Bremseinrichtung (1) nach dem vorhergehenden Anspruch, wobei an der Welle (40) ein Teil (41) eines Winkelsensors angebracht ist.

14. Magnetorheologische Bremseinrichtung (1) nach einem der vorhergehenden Ansprüche, wobei der Halter (4) an einer Konsole (50) befestigt ist und wobei insbesondere an dem Halter (4) oder der Konsole (50) ein weiterer Teil (42) eines Winkelsensors befestigt ist.

15. Magnetorheologische Bremseinrichtung (1) nach einem der vorhergehenden Ansprüche, wobei an dem dem Halter gegenüberliegenden axialen Ende eine Benutzerschnittstelle (43), ein Bedienpanel, ein Display, ein berührungsempfindliches Display mit oder ohne haptischem Feedback und/oder wenigstens ein Sensor angebracht ist und/oder wobei zumindest eine vom Magnetfeld durchflossene Komponente wenigstens teilweise aus dem Werkstoff FeSi3P besteht
und/oder wobei wenigstens ein Mikrofon und/oder eine Geräuscherkennungseinrichtung und/oder eine Spracherkennungseinrichtung umfasst oder zugeordnet ist.

## Claims

1. Magnetorheological braking device (1) with a stationary holder (4) and with at least two brake components (2, 3), wherein a first brake component (2) is non-rotatably connected with the holder (4) and extends in the axial direction (20), and wherein the second brake component (3) comprises a sleeve part (13) rotatable around the first brake component (2) and configured hollow, wherein a gap (5) is configured between the first and second brake components (2, 3), in which gap (5) at least one, two or more rotatable transmission component/s (11) is/are disposed, and wherein the gap (5) is at least partially filled with a magnetorheological medium (6),
**characterized in**
**that** the first brake component (2) comprises a core (21) of a magnetically conductive material extending in the axial direction (20), and an electric coil (26) which is wound around the core (21) in the axial direction (20), so that a magnetic field (8) of the electric coil (26) extends transverse through the first brake component (2).

2. The magnetorheological braking device (1) according to claim 1, wherein at least one transmission component (11) is configured as a rolling member, and wherein in particular at least one rolling member (11) shows a cylindrical or spherical or round or rounded cross section.

3. The magnetorheological braking device (1) according to any of the preceding claims, wherein at least a part of the transmission components (11) consists of a magnetically conductive material.

4. The magnetorheological braking device (1) according to any of the preceding claims, wherein at least a part of the transmission components (11c) consists of a magnetically nonconductive material.

5. The magnetorheological braking device (1) according to any of the preceding claims, wherein the sleeve part (13) is configured on a rotary knob (23).

6. The magnetorheological braking device (1) according to any of the preceding claims, wherein the sleeve part (13) consists of a magnetically conductive material, and provides an outer ring (24) for the magnetic field, and wherein in particular at least one radial wall thickness (13a) of the sleeve part (13) shows at least half the gap width (5a) of the gap (5) and/or of the diameter (11a) of a transmission component (11).

7. The magnetorheological braking device (1) according to any of the preceding claims, wherein the length (2a) of the first brake component (2) is larger in the axial direction (20) than is the length (11b) of a transmission component (11) in the axial direction (20), and/or wherein the length (5b) of the gap (5) in the axial direction (20) is at least twice that of the length (11b) of a transmission component (11) in the axial direction (20) .

8. The magnetorheological braking device (1) according to any of the preceding claims, wherein the first brake component (2) is substantially configured cylindrical and comprises a cylindrical main body (33) as a core (21) and the electric coil (26), and wherein in particular the electric coil (26) is wound in axial grooves (31) and/or transverse grooves (32) of the cylindrical main body (33), and wherein preferably the axial grooves (31) and/or the transverse grooves (32) are at least partially filled with grouting material (28).

9. The magnetorheological braking device (1) according to claim 8, wherein the cylindrical main body (33) is surrounded by a sleeve body (34) which is firmly connected with the cylindrical main body (33), wherein the radial thickness (34a) of the sleeve body (34) is less than half the radial gap width (5a) of the gap (5).

10. The magnetorheological braking device (1) according to any of the preceding claims, wherein the holder (4) shows a cable guide (35) .

11. The magnetorheological braking device (1) according to any of the preceding claims, wherein the holder (4) shows a takeup (36) for non-rotatable connection with the first brake component (2), and wherein the holder (4) shows a cylindrical raceway (37) for a bearing (30), rotatably supporting the sleeve part (13) on the holder (4), and wherein a seal (38) is disposed in particular on the cylindrical raceway (37) for sealing the gap (5), wherein the seal (38) is disposed closer to the gap (5) than is the bearing (30), and wherein preferably the cylindrical raceway (37) is hardened and/or shows a higher surface quality than does the radially outwardly surface of the takeup, and wherein in particular the cylindrical raceway (37) shows an outer diameter (37a) that is smaller by at least 3 mm than is the outer diameter (36a) of the takeup (36) of the holder.

12. The magnetorheological braking device (1) according to any of the preceding claims, wherein the first brake component (2) shows a bushing (39) for a shaft (40) non-rotatably connected with the second brake component (3).

13. The magnetorheological braking device (1) according to the preceding claim, wherein part (41) of an angle sensor is mounted on the shaft (40).

14. The magnetorheological braking device (1) according to any of the preceding claims, wherein the holder (4) is fixed to a console (50), and wherein another part (42) of an angle sensor is fixed in particular to the holder (4) or the console (50).

15. The magnetorheological braking device (1) according to any of the preceding claims, wherein a user interface (43), an operating panel, a display, a touch-sensitive display with or without haptic feedback, and/or at least one sensor is attached to the axial end opposite the holder,
and/or wherein at least one component through which the magnetic field flows, consists at least partially of the material FeSi3P, and/or wherein at least one microphone and/or noise recognition device and/or speech recognition device is comprised or assigned.

## Revendications

1. Dispositif de freinage magnétorhéologique (1) comprenant un support fixe (4) et au moins deux composants de freinage (2, 3), dans lequel un premier composant de freinage (2) est relié de manière solidaire en rotation au support (4) et s'étend dans la direction axiale (20) et dans lequel le deuxième composant de freinage (3) comprend une partie de douille (13) qui peut tourner autour du premier composant de freinage (2) et est de conception creuse, dans lequel une fente (5) est réalisée entre les premier et deuxième composants de freinage (2, 3), dans laquelle fente (5) est/sont agencé(s) au moins un, deux ou plusieurs composants de transmission (11) rotatifs, et dans lequel la fente (5) est remplie au moins en partie d'un milieu magnétorhéologique (6),
**caractérisé par le fait**
**que** le premier composant de freinage (2) comprend un noyau (21) en un matériau magnétiquement conducteur qui s'étend dans la direction axiale (20), ainsi qu'une bobine électrique (26) qui est enroulée dans la direction axiale (20) autour du noyau (21) de sorte qu'un champ magnétique (8) de la bobine électrique (26) s'étend à travers le premier composant de freinage (2).

2. Dispositif de freinage magnétorhéologique (1) selon la revendication 1, dans lequel au moins un composant de transmission (11) est réalisé en tant que corps roulant et dans lequel en particulier au moins un corps roulant (11) présente une section transversale cylindrique ou sphérique ou ronde ou arrondie.

3. Dispositif de freinage magnétorhéologique (1) selon l'une quelconque des revendications précédentes, dans lequel au moins une partie des composants de transmission (11) est constituée d'un matériau magnétiquement conducteur.

4. Dispositif de freinage magnétorhéologique (1) selon l'une quelconque des revendications précédentes, dans lequel au moins une partie des composants de transmission (11c) est constituée d'un matériau magnétiquement non conducteur.

5. Dispositif de freinage magnétorhéologique (1) selon l'une quelconque des revendications précédentes, dans lequel la partie de douille (13) est réalisée sur un bouton rotatif (23).

6. Dispositif de freinage magnétorhéologique (1) selon l'une quelconque des revendications précédentes, dans lequel la partie de douille (13) est constituée d'un matériau magnétiquement conducteur et fournit une bague extérieure (24) pour le champ magnétique et dans lequel en particulier au moins une épaisseur de paroi radiale (13a) de la partie de douille (13) est au moins égale à la moitié d'une largeur de fente (5a) de la fente (5) et/ou d'un diamètre (11a) d'un composant de transmission (11).

7. Dispositif de freinage magnétorhéologique (1) selon l'une quelconque des revendications précédentes, dans lequel une longueur (2a) du premier composant de freinage (2) dans la direction axiale (20) est supérieure à une longueur (11b) d'un composant de transmission (11) dans la direction axiale (20) et/ou dans lequel une longueur (5b) de la fente (5) dans la direction axiale (20) est au moins deux fois plus grande qu'une longueur (11b) d'un composant de transmission (11) dans la direction axiale (20).

8. Dispositif de freinage magnétorhéologique (1) selon l'une quelconque des revendications précédentes, dans lequel le premier composant de freinage (2) est conçu pour l'essentiel de façon cylindrique et comprend un corps de base cylindrique (33) en tant que noyau (21) et la bobine électrique (26) et dans lequel en particulier la bobine électrique (26) est enroulée dans des rainures axiales (31) et/ou des rainures transversales (32) du corps de base cylindrique (33) et dans lequel les rainures axiales (31) et/ou les rainures transversales (32) sont de préférence au moins en partie rempli d'une masse de scellement (28).

9. Dispositif de freinage magnétorhéologique (1) selon la revendication 8, dans lequel le corps de base cylindrique (33) est entouré d'un corps de douille (34) qui est solidaire du corps de base cylindrique (33), dans lequel une épaisseur radiale (34a) du corps de douille (34) est plus petite que la moitié de la largeur de fente radiale (5a) de la fente (5).

10. Dispositif de freinage magnétorhéologique (1) selon l'une quelconque des revendications précédentes, dans lequel le support (4) présente un passe-câble (35).

11. Dispositif de freinage magnétorhéologique (1) selon l'une quelconque des revendications précédentes, dans lequel le support (4) comprend un logement (36) pour la liaison solidaire en rotation au premier composant de freinage (2) et dans lequel le support (4) présente une surface de roulement cylindrique (37) pour un palier (30) et appuie ladite partie de douille (13) de manière rotative sur le support (4) et dans lequel un joint d'étanchéité (38) pour étancher la fente (5) est disposé en particulier sur la surface de roulement cylindrique (37), dans lequel le joint d'étanchéité (38) est disposé plus près de la fente (5) que le palier (30) et dans lequel, de préférence, la surface de roulement cylindrique (37) est durcie et/ou présente une qualité de surface supérieure à celle de la surface radialement extérieure du logement, et dans lequel en particulier la surface de roulement cylindrique (37) présente un diamètre extérieur (37a) qui est inférieur d'au moins 3 mm à un diamètre extérieur (36a) du logement (36) du support.

12. Dispositif de freinage magnétorhéologique (1) selon l'une quelconque des revendications précédentes, dans lequel le premier composant de freinage (2) présente un passage (39) pour un arbre (40) relié de manière solidaire en rotation au deuxième composant de freinage (3).

13. Dispositif de freinage magnétorhéologique (1) selon la revendication précédente, dans lequel une partie (41) d'un capteur d'angle est montée sur l'arbre (40).

14. Dispositif de freinage magnétorhéologique (1) selon l'une quelconque des revendications précédentes, dans lequel le support (4) est fixé à une console (50) et dans lequel une autre partie (42) d'un capteur d'angle est fixée en particulier sur le support (4) ou la console (50).

15. Dispositif de freinage magnétorhéologique (1) selon l'une quelconque des revendications précédentes, dans lequel une interface utilisateur (43), un panneau de commande, un écran, Un écran tactile avec ou sans feed-back haptique et/ou au moins un capteur est monté(e) à l'extrémité axiale opposée au support.
et/ou dans lequel au moins un composant traversé par le champ magnétique est constitué au moins en partie du matériau FeSi3P
et/ou dans lequel au moins un microphone et/ou un dispositif de reconnaissance de bruit et/ou un dispositif de reconnaissance vocale est inclus ou associé.
